# EUROPÄISCHE PATENTSCHRIFT

(11) **EP 4 163 742 B1**
(45) Veröffentlichungstag und Bekanntmachung des Hinweises auf die Patenterteilung: **17.04.2024**
(21) Anmeldenummer: 21201069.8
(22) Anmeldetag: 05.10.2021
(51) Int. Cl.: G05B 19/042

(54) **VERFAHREN ZUR PRÜFUNG EINER ZUTRITTSEINRICHTUNG MITHILFE EINES MOBILEN ENDGERÄTS UND ENTSPRECHENDES SYSTEM**
METHOD AND SYSTEM FOR TESTING AN ACCESS DEVICE USING A MOBILE TERMINAL
PROCÉDÉ DE VÉRIFICATION D'UN AGENCEMENT D'ACCÈS À L'AIDE D'UN TERMINAL MOBILE ET SYSTÈME CORRESPONDANT

(43) Veröffentlichungstag der Anmeldung: 12.04.2023
(73) Patentinhaber: dormakaba Schweiz AG, 8153 Rümlang (CH)
(72) Erfinder: Rappel, Christian, Wetzikon (CH)
(74) Vertreter: Balder IP Law, S.L.

(56) Entgegenhaltungen:
- US-A1- 2015 370 236
- US-A1- 2019 193 992
- US-A1- 2021 032 078

## Beschreibung

Die vorliegende Erfindung betrifft ein Verfahren zur Prüfung einer Zutrittseinrichtung. Ferner betrifft die Erfindung ein System, umfassend ein mobiles Endgerät und ein Serversystem.

Zutrittseinrichtungen werden in oder an Gebäuden oder Arealen verwendet, um den Zutritt zu bestimmten Bereichen und Räumen zu steuern oder zu beschränken und einzelne Bereiche und Räume vom übrigen Gebäude oder Areal abzugrenzen. Moderne Zutrittslösungen umfassen dabei häufig vielseitige Funktionen, die einer elektrischen Steuerung bedürfen, beispielsweise automatische Türvorrichtungen, Sicherheitsfunktionen, Alarmfunktionen und Schlossfunktionen. Zur Steuerung der Zutrittseinrichtungen sind daher häufig elektrische Steuergeräte bzw. Steuerungsvorrichtungen vorhanden. In der Praxis erfolgt der Einbau der Zutrittseinrichtungen und der Steuergeräte anhand von Plänen, wobei die vorgesehenen Gerätetypen an den vorgesehenen Stellen im Gebäude angeordnet und eingebaut werden. Die Inbetriebnahme von neu installierten Zutrittseinrichtungen sowie deren funktionale Konfiguration, insbesondere mithilfe passender Software, ist typischerweise umständlich sowie zeit- und kostenintensiv.

Bei der Inbetriebnahme sowie über den Lebenszyklus einer Zutrittseinrichtung können Prüfungen durchgeführt werden, in denen einerseits Fehlfunktionen oder Abnutzungserscheinungen ermittelbar sind, und andererseits die Konfiguration, insbesondere die computerimplementierten Betriebsparameter, der Zutrittseinrichtung geprüft, angepasst und eingestellt werden können.

Durch die stetige Zunahme von Funktionen und Einstellungsmöglichkeiten der Zutrittseinrichtungen kommt derartigen Prüfungen eine wichtige Rolle zu.

Die US 2019/0193992 A1 offenbart ein Verfahren zur Überwachung einer Aufzugsanlage, bei dem ein mobiles Endgerät in einer Aufzugskabine von einem Fahrgast der Aufzugsanlage getragen wird, um Messwerte zu erfassen. Die gesammelten Messwerte werden vom mobilen Endgerät an eine zentrale Auswerteeinheit übermittelt und dort ausgewertet. Das mobile Endgerät aktiviert einen Messmodus, wenn es feststellt, dass es sich in einem Bereich der Aufzugstür des Aufzugssystems befindet.

Die US 2021/0032078 A1 offenbart ein Verfahren und eine Vorrichtung zur Überwachung von Merkmalen eines Aufzugstür-Bewegungsvorgangs verwenden ein intelligentes mobiles Gerät mit mehreren Sensoren. Das Verfahren umfasst: (i) Bestimmen eines Zeitfensters, innerhalb dessen angenommen wird, dass eine Türbewegung auftritt, einschließlich eines Zeitintervalls, das von einer Startzeitgrenze und einer Endzeitgrenze eingeschlossen ist, und wobei mindestens eine der Startzeitgrenze und der Endzeitgrenze auf der Grundlage von ersten Messwerten bestimmt wird, die von einem ersten Sensor in der intelligenten mobilen Vorrichtung erfasst werden; und (ii) Erfassen von Eigenschaften des Vorgangs auf der Grundlage von zweiten Messwerten, die während des Zeitfensters von einem zweiten Sensor in der intelligenten mobilen Vorrichtung erfasst werden. Mit dem Verfahren können Türbewegungsmerkmale mit Hilfe eines intelligenten Mobiltelefons eines Fahrgastes zuverlässig überwacht werden, wobei die vom intelligenten Mobiltelefon benötigten Erfassungs- und Verarbeitungskapazitäten erheblich eingeschränkt und die Anforderungen an die Privatsphäre des Fahrgastes nicht beeinträchtigt werden.

Die US 2015/0370236 A1 offenbart ein Zustandsüberwachungssystem für ein Netzwerk von verteilten Geräten, insbesondere Windkraftwerken, wobei das System mindestens eine tragbare Kommunikationsvorrichtung und mindestens einen zentralen Kontrollserver umfasst.

Vor diesem Hintergrund stellt sich die Aufgabe, ein vorteilhaftes Verfahren zur Prüfung einer Zutrittseinrichtung bereitzustellen, das vorzugsweise eine effiziente Erkennung von Fehlern und Problemen der Zutrittseinrichtung und/oder eine vorteilhafte Einstellung und Konfiguration der Zutrittseinrichtung ermöglicht.

Die Aufgabe wird gelöst durch ein Verfahren zur Prüfung einer Zutrittseinrichtung gemäß Anspruch 1.

Erfindungsgemäß kann eine vorteilhafte Prüfung einer Zutrittseinrichtung mithilfe eines mobilen Endgeräts erfolgen. Die Prüfung kann sowohl durch Fachpersonal als auch durch einen ungeschulten Nutzer oder Betreiber der Zutrittseinrichtung erfolgen, die hierfür ein mobiles Endgerät mit einer Messeinrichtung verwenden können. Ein besonderer Vorteil der vorliegenden Erfindung ist die geringe Latenz, mit der Ergebnisse der Prüfung erhalten werden können und ggf. Gegenmaßnahmen eingeleitet werden können. Ferner wird eine vorteilhafte computerimplementierte Auswertung und Analyse von Messdaten mithilfe eines Serversystems möglich.

Bei dem mobilen Endgerät kann es sich beispielsweise um ein Mobiltelefon, insbesondere ein Smartphone, eine tragbare Computereinrichtung, wie beispielsweise einen Tablet-Computer, oder ein Wearable, wie beispielsweise eine Smartwatch, handeln. Derartige mobile Endgeräte weisen typischerweise Messeinrichtungen, wie beispielsweise Kameras oder Mikrophone, auf, sodass das erfindungsgemäße Verfahren besonders kosteneffizient und nutzerfreundlich durchführbar ist. Insbesondere weist das mobile Endgerät eine Applikation (App) auf, die es zur Durchführung der von dem mobilen Endgerät durchgeführten Schritte eines Verfahrens gemäß einer Ausführungsform der vorliegenden Erfindung konfiguriert. Über die App des mobilen Endgeräts können einem Nutzer des mobilen Endgeräts ferner Instruktionen zur Durchführung des erfindungsgemäßen Verfahrens und/oder Ergebnisse der Analyse in Schritt e) angezeigt oder akustisch ausgegeben werden.

Die Prüfung der Zutrittseinrichtung kann erfindungsgemäß mithilfe des Schritts e) erfolgen. Die Durchführung der Analyse in Schritt e) ist vorzugsweise zur Ermittlung technischer Probleme, Störungen oder Abnutzungserscheinungen der Zutrittseinrichtung vorgesehen.

Es ist denkbar, dass die Analyse in Schritt e) mithilfe von bekannten Referenzdaten, Modellen, Machine Learning und/oder trainierten künstliche Intelligenzsystemen durchgeführt wird, die zur Erkennung von Fehlern, Störungen und/oder Abnutzungserscheinungen der Zutrittseinrichtung in den Messdaten konfiguriert sind. Hierdurch kann eine vorteilhaft automatisierte und computerimplementierte Datenanalyse zur Prüfung der Zutrittseinrichtung erfolgen.

Es ist denkbar, dass sich die Prüffahrt auf eine oder mehrere Zutrittskomponenten der Zutrittseinrichtung bezieht. Die Zutrittskomponenten der Zutrittseinrichtung können auch als Subsysteme der Zutrittseinrichtung verstanden werden. Die Prüffahrt ist eine Prüffahrt eines Vereinzelungselements und/oder Türelements der Zutrittseinrichtung. Vorzugsweise umfasst die Prüffahrt eine Öffnungsfahrt und/oder Schließfahrt oder zumindest einen Teilbereich einer Öffnungsfahrt und/oder Schließfahrt des Vereinzelungselements und/oder Türelements. Es ist denkbar, dass die Prüffahrt mithilfe des mobilen Endgeräts, beispielsweise über eine Applikation (App) des mobilen Endgeräts, gestartet wird. Das mobile Endgerät übermittelt hierfür ein Startsignal, insbesondere mithilfe einer drahtlosen oder drahtgebundenen Kommunikationsschnittstelle, an die Zutrittseinrichtung. Alternativ ist es denkbar, dass die Prüffahrt in Schritts a) durch eine Nutzereingabe an einem Eingabemittel der Zutrittseinrichtung gestartet wird, beispielsweise durch das Auslösen eines Druckknopfes. Es ist denkbar, dass bei der Prüffahrt ein oder mehrere Prüfkörper, beispielsweise ein oder mehrere Holzklötze, berücksichtigt werden. Insbesondere ist es denkbar, dass der oder die Prüfkörper zwischen einem Türelement und einem Türrahmen angeordnet werden, sodass ein Notstopp der Zutrittseinrichtung bei einer Schließfahrt geprüft und/oder getestet wird.

Es ist gemäß einer Ausführungsform der vorliegenden Erfindung denkbar, dass es sich bei der Prüffahrt in Schritt a) um eine Lernfahrt und/oder Justierfahrt handelt, die zur Konfiguration und/oder Einstellung von Betriebsparametern der Zutrittseinrichtung, vorzugsweise während der Installation und/oder erstmaligen Inbetriebnahme der Zutrittseinrichtung, durchgeführt wird. Alternativ ist es denkbar, dass die Prüffahrt in Schritt a) an einer bereits installierten Zutrittseirichtung, insbesondere nach deren Inbetriebnahme, durchgeführt wird, um Funktionen der Zutrittseinrichtung zu prüfen, Fehler zu identifizieren, Abnutzungserscheinungen zu ermitteln und/oder die Konfiguration von Betriebsparametern der Zutrittseinrichtung zu ändern. Es ist dabei beispielsweise denkbar, dass die Prüffahrt in Schritt a) mindestens einen Monat oder ein Jahr nach der Installation und/oder Inbetriebnahme der Zutrittseinrichtung durchgeführt wird. Mithilfe der vorliegenden Erfindung kann somit eine vorteilhafte Prüfung bei der Inbetriebnahme der Zutrittseinrichtung und/oder über den Lebenszyklus der Zutrittseinrichtung erfolgen.

Das erfindungsgemäße Verfahren ist insbesondere ein computerimplementiertes Verfahren, bei dem ein, mehrere oder alle Schritte des Verfahrens computerimplementiert ausgeführt werden.

Die Kommunikationsverbindung zwischen dem mobilen Endgerät und dem Serversystem ist vorzugsweise mithilfe eines Telekommunikationsnetzes, insbesondere mithilfe eines Mobilfunknetzes, ausgebildet.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen,
- dass in Schritt c) aktuelle Konfigurationsinformationen, betreffend einen oder mehrere beim Durchführen der Prüffahrt in Schritt a) eingestellte Betriebsparameter der Zutrittseinrichtung, an das Serversystem übermittelt werden, vorzugsweise von dem mobilen Endgerät oder der Zutrittseinrichtung; oder
- dass aktuelle Konfigurationsinformationen, betreffend einen oder mehrere beim Durchführen der Prüffahrt in Schritt a) eingestellte Betriebsparameter der Zutrittseinrichtung, im Serversystem hinterlegt sind oder durch das Serversystem abrufbar sind, insbesondere als Teil einer digitalen Repräsentation der Zutrittseinrichtung;
vorzugsweise wobei das Durchführen der Analyse in Schritt e) unter Zuhilfenahme der aktuellen Konfigurationsinformationen erfolgt. Es ist somit besonders vorteilhaft möglich, die aktuelle Konfiguration und/oder die aktuellen Betriebsparameter, die die Zutrittseinrichtung beim Durchführen der Prüffahrt in Schritt a) aufweist, bei der Analyse in Schritt e) miteinzubeziehen. Einerseits ist es denkbar, dass die aktuellen Konfigurationsinformationen in einer digitalen Repräsentation, insbesondere einem digital twin, der Zutrittseinrichtung hinterlegt sind und dem Serversystem somit bekannt sind. In diesem Fall müssen die aktuellen Konfigurationsinformationen nicht gesondert an das Serversystem übermittelt werden. Andererseits ist es denkbar, dass die aktuellen Konfigurationsinformationen dem Serversystem nicht bekannt sind. In diesem Fall ist es bevorzugt, dass die aktuellen Konfigurationsinformationen von dem mobilen Endgerät oder der Zutrittseinrichtung an das Serversystem übermittelt werden. Es ist insbesondere denkbar, dass die aktuellen Konfigurationsinformationen mithilfe eines Speichermediums, beispielsweise eines USB-Sticks, aus der Zutrittseinrichtung ausgelesen werden und dann an das Serversystem übermittelt werden. Dies ist besonders vorteilhaft für Zutrittseinrichtungen, die über keine eigene Anbindung an ein Telekommunikationsnetz und/oder eine Cloud verfügen.

Gemäß einer Ausführungsform der vorliegenden Erfindung ist es vorgesehen, dass das Erzeugen der Messdaten in Schritt b) umfasst, dass Messdaten betreffend die Prüffahrt mithilfe der Messeinrichtung aufgenommen werden, wobei bevorzugt eine Bearbeitung der aufgenommenen Messdaten mithilfe des mobilen Endgeräts erfolgt bevor die Messdaten in Schritt c) an das Serversystem übermittelt werden,
wobei besonders bevorzugt die Bearbeitung der aufgenommenen Messdaten mithilfe des mobilen Endgeräts vor der Übermittlung in Schritt c) eine, mehrere oder alle der folgenden Bearbeitungen umfasst:
- eine Filterung der aufgenommenen Messdaten;
- eine Objekterkennung betreffend die Zutrittseinrichtung in den aufgenommenen, insbesondere optischen, Messdaten, wobei die aufgenommenen Messdaten auf Pixelbereiche beschränkt werden, die anhand der Objekterkennung als relevant identifiziert worden sind; und/oder
- eine Verringerung des Datenvolumens der aufgenommen Messdaten, bevorzugt:
   --- dadurch, dass eine Auflösung oder Qualität der aufgenommenen Messdaten verringert wird,
   --- dadurch, dass ein Dateiformat der aufgenommen Messdaten geändert wird,
   --- dadurch, dass die aufgenommenen, insbesondere optischen, Messdaten in schwarz/weiße Messdaten und/oder in Graustufen gewandelt werden,
   --- dadurch, dass Messdaten, die vor Beginn der Prüffahrt aufgenommen wurden und/oder nach Beendigung der Prüffahrt aufgenommen wurden, entfernt werden, und/oder
   --- dadurch, dass die aufgenommen Messdaten auf einen zeitlichen Teilbereich der Prüffahrt eingeschränkt werden. Es ist somit in vorteilhafter Weise denkbar, dass die Datenmenge der in Schritt c) übermittelten Messdaten durch die Bearbeitung der aufgenommenen Messdaten vor der Übermittlung verringert wird. Es ist somit denkbar, dass die Bearbeitung der aufgenommenen Messdaten mithilfe des mobilen Endgeräts eine Vorbearbeitung und/oder Voranalyse der aufgenommenen Messdaten umfasst, um die in Schritt c) zu übermittelnde Datenmenge zu verringern, sodass insbesondere der Datenoverhead in Schritt c) verringert werden kann. Durch die Verringerung des in Schritt c) zu übertragenden Datenvolumens können Bandbreite, Kosten und Energie gespart werden.

Es ist gemäß einer Ausführungsform der vorliegenden Erfindung denkbar, dass die Zutrittseinrichtung eine Steuerungsvorrichtung für ein

Vereinzelungselement der Zutrittseinrichtung und/oder für ein Türelement der Zutrittseinrichtung aufweist, wobei die Steuerungsvorrichtung zur Ansteuerung des Vereinzelungselements und/oder des Türelements derart ausgebildet ist, dass die Prüffahrt in Schritt a) durchgeführt wird. Die Steuerungsvorrichtung kann dabei als Teil der Zutrittseinrichtung verstanden werden oder als separates Element, das mit der Zutrittseinrichtung und/oder den Zutrittskomponenten der Zutrittseinrichtung verbunden ist.

Gemäß einer Ausführungsform der vorliegenden Erfindung ist es vorgesehen, dass das Durchführen der Analyse in Schritt e) auf Grundlage der in Schritt d) empfangenen Messdaten eine, mehrere oder alle der folgenden Vorgänge umfasst:
- eine Prüfung von Funktionen der Zutrittseinrichtung;
- eine Ermittlung von Fehlern, insbesondere von Störungen, der Zutrittseinrichtung;
- eine Ermittlung von Abnutzungserscheinungen der Zutrittseinrichtung. Hierdurch kann eine besonders vorteilhafte Prüfung der Zutrittseinrichtung zur Erkennung von Fehlern der Zutrittseinrichtung und/oder im Rahmen von prädiktiver Instandhaltung ("Predictive Maintenance") erfolgen. Es ist denkbar, dass in Abhängigkeit der Analyse in Schritt e) ein Wartungsintervall oder Wartungszeitpunkt für die Zutrittseinrichtung gewählt und/oder angepasst wird. Beispielsweise ist es denkbar, dass in Abhängigkeit einer Identifikation einer Abnutzungserscheinung der Zutrittseinrichtung in Schritt e) der nächste Wartungszeitpunkt der Zutrittseinrichtung angepasst wird oder dass aktiv Gegenmaßnahmen ergriffen werden, beispielsweise ein Austausch einer von der Abnutzungserscheinung betroffenen Zutrittskomponente der Zutrittseinrichtung und/oder die Anpassung von Betriebsparametern der Zutrittseinrichtung derart, dass die von der Abnutzungserscheinung betroffene Zutrittskomponente im zukünftigen Betrieb geschont wird. Als Teil der Analyse in Schritt e) ist beispielsweise ermittelbar:
- ob ein Türelement oder Vereinzelungselement der Zutrittseinrichtung ruckelt,
- ob ein Türelement oder Vereinzelungselement an Bodenunebenheit schleift, und/oder
- ob eine Anfahrt beim Öffnen und/oder Schließen unsanft erfolgt, sodass mechanische Komponenten der Zutrittseinrichtung unnötig stark beansprucht werden.

Es können in Abhängigkeit der Analyse Gegenmaßnahmen eingeleitet werden, um den identifizierten Fehler oder das identifizierte Problem zu beheben, beispielsweise können Scharniere nachgestellt werden, die Ansteuerung der Antriebseinheit des Vereinzelungselements oder Türelements angepasst werden, oder Probleme bezüglich des Sitzes der Türzarge behoben werden.

Gemäß der vorliegenden Erfindung ist es vorgesehen, dass Initialkonfigurationsinformationen, in einem Vorschritt vor Schritt a), von dem Serversystem an das mobile Endgerät und/oder an die Zutrittseinrichtung übermittelt werden,
wobei die Initialkonfigurationsinformationen eine Einstellung von einem oder mehreren Betriebsparametern der Zutrittseinrichtung betreffen, wobei in Abhängigkeit der Initialkonfigurationsinformationen in dem Vorschritt eine Einstellung des einen oder der mehreren Betriebsparameter der Zutrittseinrichtung durchgeführt wird. Hierdurch kann eine vorteilhafte Justage der Zutrittseinrichtung oder von Zutrittskomponenten der Zutrittseinrichtung durchgeführt werden. Die Zutrittseinrichtung kann im Vorschritt auf Grundlage der Initialkonfigurationsinformationen vorkonfiguriert und/oder vorjustiert werden. In der dann mithilfe der Prüffahrt und der folgenden Schritte durchgeführten Prüfung kann die Vorkonfiguration und/oder Vorjustage auf ihre Güte überprüft werden. Es können somit Fehler oder Probleme der im Vorschritt auf Grundlage der Initialkonfigurationsinformationen durchgeführten Vorkonfiguration und/oder Vorjustage mithilfe der Schritte a) bis e) identifiziert werden. Es ist dabei denkbar, dass die Initialkonfigurationsinformationen auf der Zutrittseinrichtung, beispielsweise auf einer Steuereinrichtung der Zutrittseinrichtung, aufgespielt werden, sodass eine Konfiguration der Zutrittseinrichtung automatisch durchgeführt und/oder geändert wird. Alternativ ist es denkbar, dass die Initialkonfigurationsinformationen Anweisungen, insbesondere graphische und/oder akustische Anweisungen, umfassen, die mithilfe des mobilen Endgeräts wiedergegeben werden und einen Installateur, einen Nutzer, und/oder einen Betreiber der Zutrittseinrichtung instruieren, Änderungen an der Zutrittseinrichtung oder deren Betriebsparametern vorzunehmen oder die Zutrittseinrichtung oder deren Betriebsparametern einzustellen.

Es ist gemäß einer Ausführungsform der vorliegenden Erfindung denkbar, dass die Ermittlung von Fehlern der Zutrittseinrichtung in Schritt e) umfasst, dass mithilfe der Messdaten ein Abgleich mit einem oder mehreren Schwellenwerten durchgeführt wird. Es ist dabei gemäß einer bevorzugten Ausführungsform der vorliegenden Erfindung denkbar, dass die Ermittlung von Fehlern der Zutrittseinrichtung in Schritt e) umfasst, dass eine Ist-Abweichung zwischen einem oder mehreren Messwerten und einer Norm ermittelt wird. Insbesondere wird betrachtet, ob die Ist-Abweichung zwischen dem einem oder den mehreren Messwerten innerhalb einer Soll-Abweichung um die Norm liegt, wobei die Soll-Abweichung der Norm +/- einer Toleranz entspricht. Die Norm kann dabei auch als Norm-Wert und die Toleranz als Toleranz-Wert verstanden werden, sodass die Soll-Abweichung = Norm-Wert +/- Toleranz-Wert ist. Es ist denkbar, dass ein Fehler identifiziert wird, wenn die Ist-Abweichung oberhalb der Soll-Abweichung liegt. Auch andere Vergleiche zwischen einem oder mehreren Messwerten mit einem oder mehreren Schwellenwerten sind gemäß alternativer Ausgestaltungen zur Ermittlung von Fehlern der Zutrittseinrichtung denkbar. Die Norm, die Toleranz und/oder der eine oder die mehreren Schwellenwerte sind vorzugsweise in dem Serversystem hinterlegt oder durch das Serversystem abrufbar.

Gemäß einer Ausführungsform der vorliegenden Erfindung ist es vorgesehen, dass Konfigurationsinformationen für die Zutrittseinrichtung in Abhängigkeit der in Schritt e) durchgeführten Analyse von dem Serversystem erzeugt werden, wobei vorzugsweise die Konfigurationsinformationen abhängig von
- einem ermittelten Fehler, insbesondere einer ermittelten Störung, der Zutrittseinrichtung, und/oder
- einer ermittelten Abnutzungserscheinung der Zutrittseinrichtung
   sind,
wobei die Konfigurationsinformationen von dem Serversystem an das mobile Endgerät und/oder an die Zutrittseinrichtung übermittelt werden.

Gemäß einer Ausführungsform der vorliegenden Erfindung ist es vorgesehen, dass die Konfigurationsinformationen eine Änderung von einem oder mehreren Betriebsparametern der Zutrittseinrichtung betreffen, wobei in Abhängigkeit der Konfigurationsinformationen in einem Schritt f) eine Änderung des einen oder der mehreren Betriebsparameter der Zutrittseinrichtung durchgeführt wird. Es ist dabei denkbar, dass die Konfigurationsinformationen auf der Zutrittseinrichtung, beispielsweise auf einer Steuereinrichtung der Zutrittseinrichtung, aufgespielt werden, sodass eine Konfiguration der Zutrittseinrichtung automatisch durchgeführt und/oder geändert wird. Alternativ ist es denkbar, dass die Konfigurationsinformationen Anweisungen, insbesondere graphische und/oder akustische Anweisungen, umfassen, die mithilfe des mobilen Endgeräts wiedergegeben werden und einen Installateur, einen Nutzer, und/oder einen Betreiber der Zutrittseinrichtung instruieren, Änderungen an der Zutrittseinrichtung oder deren Betriebsparametern vorzunehmen. Die Betriebsparameter der Zutrittseinrichtung werden in Schritt f) somit vorzugsweise den Konfigurationsinformationen gemäß angepasst.

Es ist gemäß einer vorteilhaften Ausführungsform der vorliegenden Erfindung möglich, dass die Konfigurationsinformationen derart zur Änderung des einen oder der mehreren Betriebsparameter der Zutrittseinrichtung eingerichtet sind, dass eine Zutrittskomponente der Zutrittseinrichtung, für die in Schritt e) eine Abnutzungserscheinung oder ein Fehler ermittelt wurde, beim Betrieb der Zutrittseinrichtung mit dem oder den geänderten Betriebsparametern geschont oder weniger belastet wird. Somit kann eine vorteilhafte, insbesondere automatisierte, Anpassung der Betriebsparameter der Zutrittseinrichtung auf Grundlage der Analyse in Schritt e) derart erfolgen, dass die Fehleranfälligkeit der Zutrittseinrichtung verringert und die Lebenszeit der Zutrittseinrichtung erhöht werden kann. Insbesondere kann somit Fehlfunktionen und Ausfällen besonders effizient vorgebeugt werden.

Gemäß einer Ausführungsform der vorliegenden Erfindung ist es vorgesehen, dass - nach der Änderung des einen oder der mehreren Betriebsparameter der Zutrittseinrichtung in Schritt f) - die Schritte a) bis e) oder a) bis f) wiederholt werden, insbesondere wobei bei dieser Wiederholung die Prüffahrt der Zutrittseinrichtung in Schritt a) mit dem einen oder den mehreren geänderten Betriebsparametern der Zutrittseinrichtung durchgeführt wird. Hierdurch kann eine iterative Optimierung der Betriebsparameter der Zutrittseinrichtung erfolgen. Es ist insbesondere denkbar, dass die Schritte a) bis f) mehrfach wiederholt werden bis die Analyse in Schritt e) ergibt, dass ein gewünschte und/oder wählbare Soll-Funktionsweise erreicht ist. Die derartige iterative Optimierung kann während der Installation und/oder erstmaligen Inbetriebnahme der Zutrittseinrichtung erfolgen. Alternativ oder zusätzlich kann eine derartige iterative Optimierung auch im Betrieb der Zutrittseinrichtung erfolgen, beispielsweise mindestens einen Monat oder mindestens ein Jahr nach der Inbetriebnahme der Zutrittseinrichtung. Es ist denkbar, dass die Schritte a) bis f) mit einer festlegbaren Anzahl an Wiederholungen durchlaufen werden oder bis die Analyse in Schritt e) ergibt, dass ein, insbesondere wählbares, Gütekriterium erfüllt ist oder ein Problem oder ein Fehler der Zutrittseinrichtung beseitigt ist.

Gemäß der vorliegenden Erfindung ist es vorgesehen, dass die Initialkonfigurationsinformationen abhängig von einem oder mehreren Nutzprofilen der Zutrittseinrichtung sind,
wobei das eine oder die mehreren Nutzprofile in Abhängigkeit der Anwendung der Zutrittseinrichtung gewählt und/oder konfiguriert sind.

Somit kann eine Optimierung der Betriebsparameter der Zutrittseinrichtung an den spezifischen Anwendungsfall und die lokalen Bedingungen am Installationsort der Zutrittseinrichtung erfolgen. Das eine oder die mehreren Nutzprofile sind vorzugsweise auf dem Serversystem hinterlegte oder zumindest durch das Serversystem abrufbare Nutzprofildaten. Es ist denkbar, dass das eine oder die mehreren Nutzprofile durch einen Nutzer oder Betreiber der Zutrittseinrichtung mithilfe einer Schnittstelle des Serversystems, beispielsweise mithilfe eines API (Application Programming Interface), und/oder mithilfe einer auf dem mobilen Endgerät und/oder einem weiteren Endgerät installierbaren Applikation (App) einstellbar und/oder auswählbar sind. Das eine oder die mehreren Nutzprofile können einer digitalen Repräsentation der Zutrittseinrichtung zuordenbar sein, wobei die digitale Repräsentation der Zutrittseinrichtung vorzugswiese auf dem Serversystem hinterlegt ist oder durch das Serversystem abrufbar ist. Ein Nutzer oder Betreiber der Zutrittseinrichtung kann somit eine individuelle Konfiguration des Nutzprofils oder der Nutzprofile vornehmen, die der Zutrittseinrichtung in dem Serversystem zugeordnet sind. Es ist insbesondere denkbar, dass der Nutzer oder Betreiber für die Zutrittseinrichtung eine Auswahl aus einer Mehrzahl von vorkonfigurierten Nutzprofilen tätigen kann und/oder mehrere vorkonfigurierte Nutzprofile in eine Rangfolge setzten kann. Es ist in diesem Zusammenhang denkbar, dass die Nutzprofile als Optimierungsstufen bezüglich unterschiedlicher Optimierungsparameter verstanden werden können. Es sind diesbezüglich eine Vielzahl von unterschiedlichen Nutzprofilen denkbar, die individuell an die Anwendungsbedingungen der Zutrittseinrichtung anpassbar sind.

Als Nutzprofile kommen beispielsweise die folgenden Nutzprofile infrage:
- Optimierung bezüglich Energieeffizienz der Zutrittseinrichtung,
- Optimierung bezüglich Energieeffizienz eines Gebäudes oder Raumes, das oder der mithilfe der Zutrittseinrichtung betretbar ist,
- Optimierung bezüglich einer Sicherheit der Zutrittseinrichtung,
- Optimierung bezüglich der Lebensdauer der Zutrittseinrichtung, und/oder
- Optimierung bezüglich der Geschwindigkeit der Zutrittseinrichtung und/oder des Nutzerkomforts bei der Benutzung der Zutrittseinrichtung und/oder des maximalen Personendurchsatzes der Zutrittseinrichtung. Es ist denkbar, dass die Betriebsparameter der Zutrittseinrichtung in Abhängigkeit des einen oder der mehreren Nutzprofile, die für die Zutrittseinrichtung ausgewählt und/oder eingestellt sind, gewählt werden.

Beispielsweise kann die Auswahl eines Nutzprofils, welches eine Optimierung bezüglich einer Energieeffizienz eines mithilfe der Zutrittseinrichtung betretbaren Gebäudes oder Raumes betrifft, umfassen, dass eine Schließfahrt eines Türelements oder Vereinzelungselements der Zutrittseinrichtung besonders schnell durchgeführt wird, um die Gesamtöffnungszeit pro Öffnungs- und Schießfahrt zu verringern, sodass weniger Wärme aus dem Gebäude oder Raum austreten kann.

Beispielsweise kann die Auswahl eines Nutzprofils, das eine Optimierung bezüglich der Lebensdauer der Zutrittseinrichtung betrifft, umfassen, dass eine Öffnungsfahrt und/oder Schließfahrt eines Türelements oder Vereinzelungselements der Zutrittseinrichtung derart durchgeführt wird, dass Scharniere und/oder ein Motor der Zutrittseinrichtung geschont werden. In diesem Fall werden die Öffnungsfahrt und/oder Schließfahrt insbesondere besonders langsam durchgeführt.

Beispielsweise kann die Auswahl eines Nutzprofils, das eine Optimierung bezüglich der Geschwindigkeit der Zutrittseinrichtung und/oder des Nutzerkomforts bei der Benutzung der Zutrittseinrichtung und/oder des maximalen Personendurchsatzes der Zutrittseinrichtung betrifft, umfassen, dass sowohl eine Öffnungsfahrt als auch eine Schließfahrt der Zutrittseinrichtung mit einer erhöhten Geschwindigkeit derart durchgeführt werden, dass der maximale Personendurchsatz pro definiertem Zeitintervall maximiert wird.

Gemäß einer Ausführungsform der vorliegenden Erfindung ist es vorgesehen, dass das Serversystem über eine digitale Repräsentation der Zutrittseinrichtung verfügt, wobei die Initialkonfigurationsinformationen und/oder die Konfigurationsinformationen als Teil der digitalen Repräsentation hinterlegt sind oder werden.

Gemäß einer Ausführungsform der vorliegenden Erfindung ist es vorgesehen, dass die Messeinrichtung eine optische Messeinrichtung, insbesondere eine Kamera, und/oder eine akustische Messeinrichtung, insbesondere ein Mikrophon, umfasst,
- wobei das Messen in Schritt a) mithilfe der optische Messeinrichtung erfolgt, sodass die erzeugten Messdaten optische Messdaten umfassen, und/oder
- wobei das Messen in Schritt a) mithilfe der akustischen Messeinrichtung erfolgt, sodass die erzeugten Messdaten akustische Messdaten umfassen. Die Analyse in Schritt e) erfolgt somit auf Grundlage von optischen Messdaten und/oder akustischen Messdaten. Die optische Messeinrichtung kann beispielsweise eine Kamera des mobilen Endgeräts sein. Die akustische Messeinrichtung kann beispielsweise ein Mikrophon des mobilen Endgeräts sein. Es ist denkbar, dass die akustischen Messdaten den hörbaren und/oder den nichthörbaren Frequenzbereich betreffen. Sowohl akustische Messdaten als auch optische Messdaten können vorteilhafte Informationen zu Fehlern, Problemen und Abnutzungserscheinungen einer Zutrittseinrichtung enthalten. Mithilfe von akustischen Messdaten kann beispielsweise ein Quietschen eines Scharniers, ein Geräusch einer Antriebseinheit oder ein ungewünschtes mechanisches Schleifen, Kratzen oder Schaben zwischen dem Boden und der Zutrittseinrichtung während der Prüffahrt ermittelt werden. Somit kann beispielsweise festgestellt werden, dass eine Antriebseinheit geölt werden muss oder dass ein bewegliches Türelement oder Vereinzelungselement der Zutrittseinrichtung nachjustiert werden muss. Mithilfe von optischen Messdaten können beispielsweise unerwünschte Änderungen in der Geschwindigkeit während der Prüffahrt oder Probleme beim Anfahren oder Bremsen zum Beginn oder zum Ende einer Öffnungsfahrt oder Schließfahrt ermittelt werden.

Gemäß einer Ausführungsform der vorliegenden Erfindung ist es vorgesehen, dass die in Schritt a) erzeugten Messdaten sowohl optische Messdaten als auch akustische Messdaten umfassen, insbesondere wobei die optischen Messdaten und akustischen Messdaten gleichzeitig in Schritt a) aufgenommen werden, wobei die Zutrittseinrichtung während der Prüffahrt in Schritt a) ein akustisches Kalibrationssignal und/oder ein optisches Kalibrationssignal ausgibt,
wobei anhand des akustischen Kalibrationssignals und/oder des optischen Kalibrationssignals eine Abstimmung der optischen und akustischen Messdaten aufeinander erfolgt, vorzugsweise in Schritt b) und/oder Schritt e). Es ist bevorzugt, dass die Zutrittseinrichtung sowohl ein optisches Kalibrationssignal als auch ein akustisches Kalibrationssignal ausgibt, besonders bevorzugt gleichzeitig. Somit kann eine besonders vorteilhafte und umfassende Prüfung erfolgen. Hierfür ist es besonders vorteilhaft denkbar, dass die aufgenommenen akustischen und optischen Messdaten zeitlich miteinander in Beziehung gesetzt werden, wobei mithilfe des akustischen und des optischen Kalibrationssignals ermittelt wird, welche akustischen und optischen Messdaten denselben Zeitpunkt während der Prüffahrt abbilden. Durch die Identifikation des akustischen Kalibrationssignals in den akustischen Messdaten und die Identifikation des optischen Kalibrationssignals in den optischen Messdaten kann somit eine zeitliche Zuordnung zwischen den optischen und akustischen Messdaten erfolgen. Die Ausgabe des akustischen und/oder optischen Kalibrationssignals kann beispielsweise zu einem festgelegten Zeitpunkt während der Prüffahrt und/oder an einer festgelegten Position der Zutrittseinrichtung während der Prüffahrt in Schritt a) erfolgen. Das akustische Kalibrationssignal ist vorzugsweise im nicht-hörbaren Bereich, sodass es einen Nutzer des mobilen Endgeräts nicht stört oder verwirrt. Es ist alternativ jedoch denkbar, dass das akustische Kalibrationssignal ein hörbares Signal ist. Es ist denkbar, dass das akustische Kalibrationssignal von einem Lautsprecher der Zutrittseinrichtung ausgeben wird. Es ist alternativ denkbar, dass es sich bei dem akustischen Kalibrationssignal um ein akustisches Signal einer Zutrittskomponente der Zutrittseinrichtung handelt, die eine andere Hauptfunktion als die Ausgabe akustischer Signale aufweist. Beispielsweise kann das akustische Kalibrationssignal von einer Antriebseinheit der Zutrittseinrichtung ausgeben werden, und beispielsweise ein absichtlich herbeigeführtes Motorsurren umfassen. Es ist denkbar, dass das optische Kalibrationssignal mithilfe eines Leuchtmittels, beispielsweise einer Lampe, der Zutrittseinrichtung ausgeben wird. Bei dem optischen Kalibrationssignal kann es sich beispielsweise um ein Blinken oder Aufleuchten des Leuchtmittels handeln. Es ist beispielsweise denkbar, dass das Leuchtmittel Teil der Antriebseinheit der Zutrittseinrichtung ist. Es ist denkbar, dass das optische Kalibrationssignal im sichtbaren oder nicht-sichtbaren Frequenzbereich liegt. Beispielsweise kann das optische Kalibrationssginal im infraroten Bereich liegen.

Es ist gemäß einer alternativen Ausführungsform denkbar, dass lediglich ein akustisches Kalibrationssignal von der Zutrittseinrichtung bei der Prüffahrt ausgegeben wird. Das akustische Kalibrationssignal kann beispielsweise bei einem festgelegten Öffnungswinkel eines Türelements oder Vereinzelungselements der Zutrittseinrichtung während der Prüffahrt ausgeben werden. Der Öffnungswinkel ist in den optischen Messdaten identifizierbar, sodass eine vorteilhafte zeitliche Abstimmung zwischen den optischen und akustischen Messdaten anhand des akustischen Kalibrationssignals möglich ist.

Gemäß einer Ausführungsform der vorliegenden Erfindung ist es vorgesehen, dass vor der Prüffahrt in Schritt a) ein Markierungselement oder mehrere Markierungselemente an der Zutrittseinrichtung angeordnet werden, wobei eine Erkennung einer Position der Zutrittseinrichtung in den Messdaten, insbesondere den optischen Messdaten, mithilfe des Markierungselements oder der mehreren Markierungselemente erfolgt, vorzugsweise bei der Durchführung der Analyse in Schritt e) und/oder bei der Bearbeitung der aufgenommenen Messdaten in Schritt b). Mithilfe eines derartigen Markierungselements kann die Bewegung der Zutrittseinrichtung während der Prüffahrt besonders vorteilhaft ermittelt werden. Das Markierungselement kann ferner bei einer anhand der optischen Messdaten durchgeführten Objekterkennung dabei helfen, die Zutrittseinrichtung und/oder deren Umrisse computerimplementiert in den Messdaten zu erkennen. Das Markierungselement kann beispielsweise einen Reflektor umfassen, der in den aufgenommenen optischen Messdaten als Referenzpunkt für die Ermittlung der Bewegung und/oder Position der Zutrittseinrichtung bei der Prüffahrt verwendet wird. Instruktionen zur Anordnung des Markierungselements an der Zutrittseinrichtung und/oder Angaben zu einer Anbringungsposition des Markierungselements an der Zutrittseinrichtung können einem Nutzer durch das mobile Endgerät mitgeteilt werden, beispielsweise über eine optische und/oder akustische Ausgabe mithilfe einer Applikation (App) des mobilen Endgeräts. Beispielsweise ist es denkbar, dass ein Nutzer durch eine Applikation des mobilen Endgeräts zur Anordnung eines Markierungselements an der Zutrittseinrichtung, beispielsweise an einem Türrahmen oder einem beweglichen Türelement, angewiesen wird. Da die Abmessungen des Markierungselements bekannt sind, können mithilfe des Markierungselements Längenmaße, Breitenmaße, Abstände und/oder Bewegungen der Zutrittseinrichtung besonders vorteilhaft in den optischen Messdaten ermittelt werden, insbesondere in Schritt b) und/oder Schritt e).

Gemäß einer Ausführungsform der vorliegenden Erfindung ist es vorgesehen, dass eine Sensoreinrichtung, insbesondere eine Radarsensoreinrichtung, vorhanden ist, wobei mithilfe der Sensoreinrichtung während der Prüffahrt in Schritt a) weitere Messdaten, betreffend eine Position und/oder eine Geschwindigkeit der Zutrittseinrichtung während der Prüffahrt, ermittelt werden, wobei die weiteren Messdaten an das Serversystem übermittelt werden, wobei die Analyse in Schritt e) zusätzlich mithilfe der weiteren Messdaten durchgeführt wird. Die Sensoreinrichtung ist vorzugsweise Teil der Zutrittseinrichtung. Hierdurch kann eine Position, insbesondere ein Öffnungswinkel, eine Geschwindigkeit und/oder eine Beschleunigung eines Türelements oder eines Vereinzelungselements der Zutrittseinrichtung während der Prüffahrt besonders genau ermittelt werden. Mit den derart erhaltenen Messdaten wird eine besonders präzise und umfangreiche Analyse in Schritt e) möglich. Die Sensoreinrichtung, insbesondere die Radarsensoreinrichtung, kann Teil der Zutrittseinrichtung, Teil des mobilen Endgeräts, oder ein von der Zutrittseinrichtung und dem mobilen Endgerät separates Gerät sein.

Gemäß einer Ausführungsform der vorliegenden Erfindung ist es vorgesehen, dass die Zutrittseinrichtung eine elektrische Sensoreinrichtung aufweist, wobei mithilfe der elektrischen Sensoreinrichtung elektrische Messdaten, betreffend eine elektrische Spannung und/oder einen elektrischen Strom eines Motors der Zutrittseinrichtung und/oder einer Steuerungsvorrichtung der Zutrittseinrichtung, während der Prüffahrt in Schritt a) ermittelt werden, wobei die elektrischen Messdaten an das Serversystem übermittelt werden, wobei die Analyse in Schritt e) zusätzlich mithilfe der elektrischen Messdaten durchgeführt wird. Die elektrischen Messdaten sind dabei insbesondere als Messdaten zu verstehen, die eine elektrische Spannung und/oder einen elektrischen Strom eines Motors der Zutrittseinrichtung und/oder einer Steuerungsvorrichtung der Zutrittseinrichtung betreffen. In derartige Daten können unerwünschte mechanische Reibungen zwischen der Zutrittseinrichtung und dem Boden oder Verschließerscheinungen von Scharnieren oder dem Motor als unerwartete Schwankungen oder Ausschläge in der Spannung und/oder dem Strom besonders vorteilhaft identifiziert werden. Insbesondere werden die elektrischen Messdaten zusätzlich zu den akustischen und/oder optischen Messdaten ermittelt und stellen eine Ergänzung zu den akustischen und/oder optischen Messdaten bei der Analyse in Schritt e) dar. Es ist denkbar, dass sich das mobile Endgerät über eine Kommunikationsschnittstelle des mobilen Endgeräts mit der Zutrittseinrichtung und/oder der elektrischen Sensoreinrichtung verbindet, wobei die elektrischen Messdaten von der Zutrittseinrichtung und/oder der elektrischen Sensoreinrichtung an das mobile Endgerät übermittelt werden. Das mobile Endgerät übermittelt dann zumindest einen Teil der elektrischen Messdaten an das Serversystem, sodass die elektrischen Messdaten dem Serversystem bei der Analyse in Schritt e) zur Verfügung stehen. Es ist alternativ denkbar, dass die elektrischen Messdaten von der Zutrittseinrichtung und/oder der elektrischen Sensoreinrichtung mithilfe einer entsprechenden Kommunikationsschnittelle direkt an das Serversystem übermittelt werden. Gemäß einer Ausführungsform ist es denkbar, dass die elektrische Sensoreinrichtung einen Winkelsensor der Zutrittseinrichtung umfasst, wobei die elektrischen Messdaten mithilfe des Winkelsensors aufgenommen werden. Besonders bevorzugt ist dies bei einer Zutrittseinrichtung mit einem oder mehreren Flügeltürantrieben, die derartige Winkelsensoren häufig ohnehin aufweisen.

Gemäß einer Ausführungsform der vorliegenden Erfindung ist es vorgesehen, dass das Serversystem in Schritt e) mithilfe der von dem Serversystem erhaltenen Messdaten eine Identifikation der Zutrittseinrichtung durchführt, die Schritt a) durchgeführt hat. Beispielsweise ist es möglich, dass die Zutrittseinrichtung eine optisch erkennbare Markierung aufweist, anhand derer eine Identifikation der Zutrittseinrichtung in den optischen Messdaten möglich ist. Alternativ oder zusätzlich ist es denkbar, dass das optische und/oder akustische Kalibrationssignal, welches die Zutrittseinrichtung vorzugsweise bei der Prüffahrt aussendet, zur Identifikation der Zutrittseinrichtung geeignet ist. Es kann somit vorteilhafterweise darauf verzichtet werden, dass ein Nutzer des mobilen Endgeräts eine Identifikationsinformation der Zutrittseinrichtung manuell eingeben und an das Serversystem übermitteln muss.

Alternativ oder zusätzlich ist es denkbar, dass die Zutrittseinrichtung eine Identifikationsinformation zur Identifikation der Zutrittseinrichtung mithilfe einer Kommunikationsschnittstelle des mobilen Endgeräts, beispielsweise mithilfe von WiFi oder Bluetooth, an das mobile Endgerät übermittelt, wobei das das mobile Endgerät die Identifikationsinformation an das Serversystem überträgt.

Gemäß einer Ausführungsform der vorliegenden Erfindung ist es möglich, dass auf einem Bildschirm des mobilen Endgeräts ein Ausrichtungselement, beispielsweise ein Rahmen oder ein Umrisss einer Türzarge, angezeigt wird - vorzugsweise vor und/oder während Schritt a) und/oder b) - , wobei das Ausrichtungselement vorgibt, wie das mobile Endgerät, insbesondere die optische Messeinrichtung, ausgerichtet werden muss, um die optischen Messdaten während der Prüffahrt in Schritt b) aufzunehmen. Das Ausrichtungselement kann insbesondere auch als auf dem Bildschirm angezeigtes Referenzmuster verstanden werden, das den Nutzer anweist, wie das mobile Endgerät zur Messung der Prüffahrt auszurichten ist. Alternativ oder zusätzlich ist es gemäß einer Ausführungsform der vorliegenden Erfindung denkbar, dass - vorzugsweise vor und/oder während Schritt a) und/oder b) - einem Nutzer des mobilen Endgeräts ein idealer Standort relativ zur Zutrittseinrichtung vorgegeben wird, von dem aus die Ermittlung der Messdaten, insbesondere der optischen Messdaten, während der Prüffahrt in Schritt b) zu erfolgen hat. Die Vorgabe dieses idealen Standorts erfolgt beispielsweise mithilfe eines Bildschirms des mobilen Endgeräts und/oder mithilfe von Augmented-Reality. Es ist beispielsweise denkbar, dass die Vorgabe des Standorts derart erfolgt, dass ein Lichtsignal einem Nutzer signalisiert, wie nah sich der Nutzer bzw. das mobile Endgerät an dem idealen Standort zur Messung der Prüffahrt befindet. Dies kann beispielsweise über ein farbiges Signal erfolgen, das dem Nutzer mithilfe des Bildschirms und/oder mithilfe von Augmented-Reality dargestellt wird. Beispielsweise kann das farbige Signal in der direkten Umgebung des idealen Standorts grün erscheinen und bei einem zu weiten Abstand von dem idealen Standort, insbesondere oberhalb eines Abstands-Schwellenwerts, rot. Es ist vorzugsweise denkbar, dass mithilfe des Bildschirms und/oder mithilfe von Augmented-Reality Information dazu dargestellt werden, wie nah sich der Nutzer bzw. das mobile Endgerät an dem idealen Standort befindet. Vorzugsweise ist es denkbar, dass in die Analyse in Schritt e) miteinbezogen wird, wie weit entfernt vom idealen Standort sich das mobile Endgerät bei der Erzeugung der Messdaten in Schritt b) befunden hat. Es ist denkbar, dass dem Nutzer des mobilen Endgeräts ein Maß dafür angezeigt wird, mit welcher Qualität die Analyse in Schritt e) durchführbar ist, wobei dieses Maß abhängig von der Position des Nutzers bzw. mobilen Endgeräts relativ zum idealen Standort ist. Beispielsweise kann dem Nutzer mithilfe des Bildschirms und/oder mithilfe von Augmented-Relatiy angezeigt werden, dass an seiner aktuellen Position lediglich eine Qualität von 50% geliefert werden kann. Alternativ oder zusätzlich ist auch die Ausgabe eines akustischen Signals mithilfe des mobilen Endgeräts denkbar, das einen Nutzer des mobilen Endgeräts auf den idealen Standort oder seine momentane Entfernung zum idealen Standort hinweist.

Ein weiterer Gegenstand der vorliegenden Erfindung ist ein System zur Prüfung einer Zutrittseinrichtung mithilfe eines mobilen Endgeräts, wobei das System das mobile Endgerät und ein Serversystem umfasst, wobei das mobile Endgerät über eine direkte oder indirekte Kommunikationsverbindung zur Kommunikation mit dem Serversystem eingerichtet ist,
wobei das System konfiguriert ist, um ein Verfahren gemäß einer Ausführungsform der vorliegenden Erfindung durchzuführen.

Vorzugsweise umfasst das System ferner die Zutrittseinrichtung.

Die Merkmale, Ausführungsformen und Vorteile, die im Zusammenhang mit einem der erfindungsgemäßen Gegenstände beschrieben worden sind, können jeweils auch für die weiteren erfindungsgemäßen Gegenstände Anwendung finden. Insbesondere können für das erfindungsgemäße System dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind.

Nachfolgend sollen weitere Vorteile und Einzelheiten der Erfindung anhand der in den Zeichnungen dargestellten Ausführungsbeispiele erläutert werden. Hierin zeigen
- Fig. 1: eine schematische Darstellung eines Systems gemäß einem Ausführungsbeispiel der vorliegenden Erfindung;
- Fig. 2A: eine schematische Darstellung einer Zutrittseinrichtung gemäß einem Ausführungsbeispiel der vorliegenden Erfindung;
- Fig. 2B: eine schematische Darstellung eines mobilen Endgeräts gemäß einem Ausführungsbeispiel der vorliegenden Erfindung;
- Fig. 3: eine schematische Darstellung eines Verfahrens gemäß einer Ausführungsform der vorliegenden Erfindung;
- Fig. 4: eine schematische Darstellung eines Verfahrens gemäß einer Ausführungsform der vorliegenden Erfindung;
- Fig. 5: eine schematische Darstellung eines Verfahrens gemäß einer Ausführungsform der vorliegenden Erfindung;
- Fig. 6: eine schematische Darstellung eines Verfahrens gemäß einer Ausführungsform der vorliegenden Erfindung.

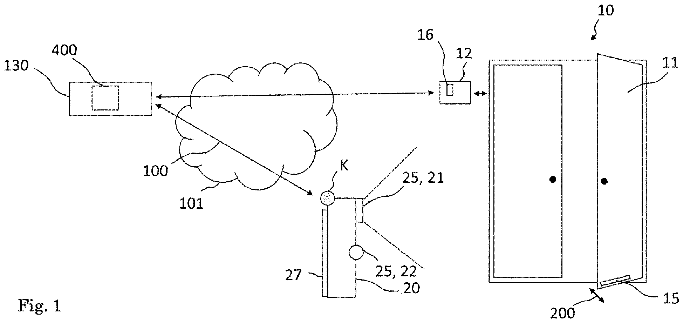

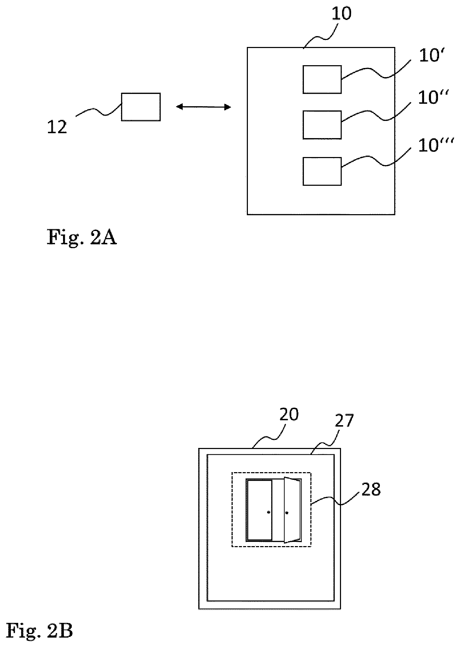

In Fig.1 ist ein System gemäß einem Ausführungsbeispiel der vorliegenden Erfindung gezeigt. Eine Steuerungsvorrichtung 12 ist mit einer Zutrittseinrichtung 10 verbunden oder als Teil der Zutrittseinrichtung 10 ausgebildet. Die Steuerungsvorrichtung 12 und die Zutrittseinrichtung 10 können über eine drahtlose und/oder drahtgebundene Verbindung kommunizieren. Bevorzugt ist eine kabelgebundene Verbindung, insbesondere ein Bus-System, zwischen der Steuerungsvorrichtung 12 und der Zutrittseinrichtung 10 ausgebildet. Die Steuerungsvorrichtung 12 und die Zutrittseinrichtung 10 sind insbesondere in oder an einem Gebäude und/oder Areal verbaut. Es ist möglich, dass die Steuerungsvorrichtung 12 und/oder die Zutrittseinrichtung 10 eine elektrische Sensoreinrichtung 16 aufweist, die zur Messung eines Stroms und/oder einer Spannung eines Motors der Zutrittseinrichtung 10 und/oder zur Messung eines Stroms und/oder einer Spannung der Steuerungsvorrichtung ausgebildet ist. Die Zutrittseinrichtung 10 umfasst diverse Zutrittskomponenten 10', 10", 10‴ (vgl. Fig. 2A), beispielsweise ein Türelement 11 und eine Antriebseinheit, die zum Antreiben des Türelements 11 eingerichtet ist. Bei der Antriebseinheit kann es sich insbesondere um einen Motor oder Aktuator handeln. Die Steuerungsvorrichtung 12 ist zur Ansteuerung der Zutrittseinrichtung 10 vorgesehen, insbesondere zur Ansteuerung eines Antriebseinheit, konfiguriert. Die Zutrittseinrichtung 10 kann ferner eine Vielzahl weiterer Zutrittskomponenten 10', 10", 10‴, beispielswiese ein Scharnier, ein Schloss, ein Sicherheitssystem, eine Signalvorrichtung, ein Leuchtmittel usw. aufweisen.

Ferner umfasst das System ein mobiles Endgerät 20. Das mobile Endgerät 20 weist eine Kommunikationsschnittstelle K auf. Über die Kommunikationsschnittelle K ist das mobile Endgerät 20 zur Kommunikation mit einem Serversystem 130 ausgebildet. Die Kommunikation zwischen dem mobilen Endgerät 20 und dem Serversystem 130 erfolgt in der dargestellten Ausführungsform über drahtlose Kommunikationsverbindung 100 über ein Mobilfunknetz 101. Es sind jedoch auch andere direkte oder indirekte Kommunikationsverbindungen 100, beispielsweise kabelgebundene Verbindungen und/oder Verbindungen über Zwischenelemente, denkbar. Über die Kommunikationsschnittelle K oder eine weitere Kommunikationsschnittstelle ist das mobile Endgerät 20 vorzugsweise ferner zur Kommunikation mit der Zutrittseinrichtung 10 ausgebildet. Die Kommunikation zwischen mobilen Endgerät 20 und der Zutrittseinrichtung 10 erfolgt dabei vorzugsweise drahtlos, beispielsweise mithilfe von WiFi oder Bluetooth. Es ist bevorzugt denkbar, dass das Serversystem 130 mithilfe einer Cloud ausgebildet ist. In dem Serversystem 130 ist eine digitale Repräsentation der Zutrittseinrichtung 10, insbesondere ein "Digital Twin" der Zutrittseinrichtung, hinterlegt. Der digitalen Repräsentation können ein oder mehrere Nutzprofile 400 der Zutrittseinrichtung 10 zugeordnet sein. Diese Nutzprofile 400 sind insbesondere durch einen Nutzer oder Betreiber der Zutrittseinrichtung 10 wählbar und/oder einstellbar. Anhand des oder der für die Zutrittseinrichtung 10 gewählten Nutzprofile 400 werden Initialkonfigurationsinformationen und/oder Konfigurationsinformationen für die Zutrittseinrichtung erzeugt und/oder von dem Serversystem 130 and das mobile Endgerät 20 oder die Zutrittseinrichtung 10, insbesondere die Steuerungsvorrichtung 12 der Zutrittseinrichtung 10, übermittelt. Die Initialkonfigurationsinformationen und/oder Konfigurationsinformationen sind insbesondere zur Einstellung von Betriebsparametern der Zutrittseinrichtung 10 vorgesehen. Die Betriebsparameter können dabei beispielsweise Parameter zur Ansteuerung einer Antriebseinheit der Zutrittseinrichtung 10, Beschleunigungs- und/oder Geschwindigkeitsinformationen für Öffnungs- und/oder Schließfahrten der Zutrittseinrichtung 10 usw. umfassen. Die durch die Initialkonfigurationsinformationen und/oder Konfigurationsinformationen konfigurierten Betriebsparameter der Zutrittseinrichtung 10 sind somit vorzugsweise abhängig von dem oder den für die Zutrittseinrichtung 10 ausgewählten Nutzprofilen 400. Als Nutzprofile 400 kommen beispielsweise die folgenden Nutzprofile infrage:
- Optimierung bezüglich Energieeffizienz der Zutrittseinrichtung 10,
- Optimierung bezüglich Energieeffizienz eines Gebäudes oder Raumes, das oder der mithilfe der Zutrittseinrichtung 10 betretbar ist,
- Optimierung bezüglich einer Sicherheit der Zutrittseinrichtung 10,
- Optimierung bezüglich der Lebensdauer der Zutrittseinrichtung 10,
- Optimierung bezüglich der Geschwindigkeit der Zutrittseinrichtung 10 und/oder des Nutzerkomforts bei der Benutzung der Zutrittseinrichtung 10 und/oder des maximalen Personendurchsatzes der Zutrittseinrichtung 10.

Das mobile Endgerät 20 umfasst eine Messeinrichtung 25. In der dargestellten Ausführungsform umfasst die Messeinrichtung 25 sowohl eine optische Messeinrichtung 21 als auch eine akustische Messeinrichtung 22, sodass das mobile Endgerät 20 sowohl optische Messdaten als auch akustische Messdaten aufzeichnen kann. Das mobile Endgerät 20 wird typischerweise von einem Nutzer oder Betreiber der Zutrittseinrichtung 10 oder einem Installateur mitgeführt. Das mobile Endgerät 20 kann zur Aufnahme von Messdaten, betreffend die Zutrittseinrichtung 10, in die Umgebung der Zutrittseinrichtung 10 bewegt werden.

Das Türelement 11 der Zutrittseinrichtung 10 ist zur Durchführung einer Prüffahrt 200 ausgebildet. Die Prüffahrt 200 kann beispielsweise einen Öffnungsvorgang und/oder einen Schließvorgang des Türelements 11 umfassen. Mithilfe der Messeinrichtung 25 des mobilen Endgeräts 20 wird die Prüffahrt 200 aufgezeichnet, sodass Messdaten, betreffend die Prüffahrt 200, erzeugt werden. Es ist optional möglich, dass vor der Durchführung der Prüffahrt 200 ein Markierungselement 15 an der Zutrittseinrichtung 10, insbesondere an dem Türelement 11, angeordnet wird. Das Markierungselement 15 kann die Erkennung oder Verortung der Zutrittseinrichtung 10 in den mithilfe der optischen Messeinrichtung 21 aufgenommenen optischen Messdaten unterstützen, sodass die optischen Messdaten besonders vorteilhaft von dem mobilen Endgerät 20 und/oder dem Serversystem 130 ausgewertet werden können. Es ist beispielsweise denkbar, dass mithilfe des Markierungselements 15 eine besonders genaue Ermittlung der Position des Türelements 11 während der Prüffahrt 200 in den optischen Messdaten möglich wird. Das mobile Endgerät umfasst ferner einen Bildschirm 27, auf dem mithilfe der optischen Messeinrichtung 21 aufgenommene optische Messdaten, insbesondere ein Video, einem Nutzer live angezeigt werden kann.

In Fig, 2A ist eine schematische Darstellung einer Zutrittseinrichtung 10 gemäß einer Ausführungsform der vorliegenden Erfindung gezeigt. Die Zutrittseinrichtung 10 umfasst mehrere Zutrittskomponenten 10', 10", 10‴. Bei den Zutrittskomponenten 10', 10", 10‴ kann es sich beispielsweise um eine oder mehrere der folgenden Komponenten handeln:
- ein Türelement 11 und/oder ein Vereinzelungselement,
- ein Scharnier,
- ein Brandschutzelement,
- ein Schloss, insbesondere ein elektrisches Schloss,
- eine Öffnungs- und/oder Schließvorrichtung für ein Türelement, insbesondere umfassend einen Aktuator und/oder Motor,
- eine Personenkontroll- und/oder Identitätskontrolleinrichtung, insbesondere ein Lesegerät für einen Pass,
- eine Zutrittskontrolleinrichtung, insbesondere eine Code- oder Passwortkontrolle,
- einen biometrischen Sensor,
- einen optischen Sensor,
- einen akustischen Sensor,
- eine elektrische Strom- und/oder Spannungsversorgung,
- eine Anzeigeeinrichtung,
- ein Leuchtmittel,
- eine akustische Ausgabevorrichtung,
- eine Warn- und/oder Sicherheitsvorrichtung. Die Steuerungsvorrichtung 12 ist mit der Zutrittseinrichtung 10 verbunden oder Teil der Zutrittseinrichtung 10. Die Steuerungsvorrichtung 12 weist eine Kommunikationsverbindung mit einer oder mehreren der Zutrittskomponenten auf.

In Fig, 2B ist ein mobiles Endgerät 20 gemäß einer Ausführungsform der vorliegenden Erfindung gezeigt. Es ist möglich, dass auf dem Bildschirm 27 des mobilen Endgeräts 20 ein Ausrichtungselement 28, beispielsweise ein Rahmen oder ein Umrisss einer Türzarge, angezeigt wird, der vorgibt, wie das mobile Endgerät 20, insbesondere die optische Messeinrichtung 21, ausgerichtet werden muss, um die optischen Messdaten während der Prüffahrt 200 in Schritt b) besonders vorteilhaft aufzunehmen. Das Ausrichtungselement 28 kann insbesondere auch als auf dem Bildschirm 27 angezeigtes Referenzmuster verstanden werden, das den Nutzer anweist, wie das mobile Endgerät 20 zur Messung der Prüffahrt 200 auszurichten ist. Der Nutzer bewegt das mobile Endgerät 20 vor dem Start der Prüffahrt 200 und/oder während der Prüffahrt 200 derart, dass die Zutrittseinrichtung 10, in dem mithilfe der optischen Messeinrichtung 21 aufgenommenen und auf dem Bildschirm 27 angezeigten Videobild, innerhalb des Ausrichtungselements 28 liegt. Hierdurch wird sichergestellt, dass bei der Erzeugung der optischen Messdaten in Schritt b) die Zutrittseinrichtung 10 tatsächlich von der optischen Messeinrichtung 21 erfasst wird. Die Anzeige des Ausrichtungselements 28 auf dem Bildschirm 27 kann als Teil einer Applikation (App) des mobilen Endgeräts 20 erfolgen, wobei die Applikation für die Prüfung der Zutrittseinrichtung 10 vorgesehen ist.

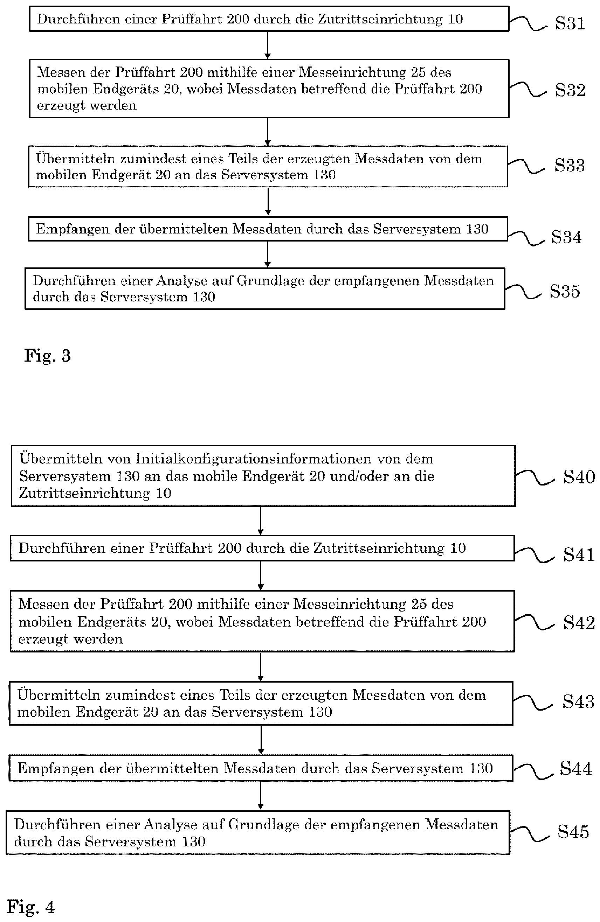

In Fig. 3 ist eine schematische Darstellung eines Verfahrens zur Prüfung einer Zutrittseinrichtung 10 mithilfe eines mobilen Endgeräts 20 gemäß einer Ausführungsform der vorliegenden Erfindung gezeigt. In einem Schritt S31 wird eine Prüffahrt 200 durch die Zutrittseinrichtung 10 durchgeführt. In einem Schritt S32 erfolgt ein Messen der Prüffahrt 200 mithilfe einer Messeinrichtung 25 des mobilen Endgeräts 20, wobei Messdaten betreffend die Prüffahrt 200 erzeugt werden.

Das Erzeugen der Messdaten in S32 umfasst, dass Messdaten betreffend die Prüffahrt 200 mithilfe der Messeinrichtung 25 aufgenommen werden, wobei optional eine Bearbeitung der aufgenommenen Messdaten mithilfe des mobilen Endgeräts 20 erfolgt bevor die Messdaten in Schritt S33 an das Serversystem 130 übermittelt werden. Diese Bearbeitung der aufgenommenen Messdaten in Schritt S32 umfasst insbesondere eine, mehrere oder alle der folgenden Bearbeitungen:
- eine Filterung der aufgenommenen Messdaten;
- eine Objekterkennung betreffend die Zutrittseinrichtung 10 in den aufgenommenen optischen Messdaten, wobei die aufgenommenen Messdaten auf Pixelbereiche beschränkt werden, die anhand der Objekterkennung als relevant identifiziert worden sind; und/oder
- eine Verringerung des Datenvolumens der aufgenommen Messdaten, bevorzugt:
   --- dadurch, dass eine Auflösung oder Qualität der aufgenommenen Messdaten verringert wird,
   --- dadurch, dass ein Dateiformat der aufgenommen Messdaten geändert wird,
   --- dadurch, dass optische Messdaten in schwarz/weiße Messdaten und/oder in Graustufen gewandelt werden, und/oder
   --- dadurch, dass Messdaten, die vor Beginn der Prüffahrt 200 aufgenommen wurden und/oder nach Beendigung der Prüffahrt 200 aufgenommen wurden, entfernt werden, und/oder
   --- dadurch, dass die aufgenommen Messdaten auf einen zeitlichen Teilbereich der Prüffahrt 200 eingeschränkt werden.

In Schritt S33 wird zumindest ein Teil der in Schritt S32 erzeugten Messdaten von dem mobilen Endgerät 20 an das Serversystem 130 übermittelt. In Schritt S34 werden die in Schritt S33 übermittelten Messdaten durch das Serversystem 130 empfangen. In Schritt S35 erfolgt das Durchführen einer Analyse auf Grundlage der empfangenen Messdaten durch das Serversystem 130. Diese Analyse ist zur Prüfung der Zutrittseinrichtung 10 eingerichtet, insbesondere zur Ermittlung von Fehlern, Problemen und Abnutzungserscheinungen der Zutrittseinrichtung 10, die anhand der in Schritt S34 empfangenen Messdaten identifiziert werden. Die Analyse in Schritt S35 erfolgt beispielsweise mithilfe von Modellen, mithilfe von künstlicher Intelligenz und/oder mithilfe von Referenzdaten, die dem Serversystem 130 zur Verfügung stehen.

Es ist optional möglich, dass bei der Analyse in Schritt S35 zusätzlich elektrische Messdaten verwendet werden, die eine Spannung oder einen Strom einer Antriebseinheit, insbesondere eines Motors, der Zutrittseinrichtung 10 und/oder einer Steuerungsvorrichtung 12 der Zutrittseinrichtung 10 bei der Prüffahrt 200 betreffen, verwendet werden. Derartige elektrische Messdaten können bei der Prüffahrt von einer elektrischen Sensoreinrichtung 16 ermittelt werden und von der elektrischen Sensoreinrichtung 16 und/oder der Zutrittseinrichtung 10 und/oder dem mobilen Endgerät 20 an das Serversystem 130 übermittelt werden.

Es ist optional möglich, dass bei der Analyse in Schritt S35 zusätzlich weitere Messdaten verwendet werden, die mithilfe einer Sensoreinrichtung, beispielsweise einer Radarsensoreinrichtung, bei der Prüffahrt 200 ermittelt werden und eine Position oder Geschwindigkeit der Zutrittseinrichtung bei der Prüffahrt betreffen. Derartige weitere Messdaten können beispielsweise von dieser Sensoreinrichtung und/oder der Zutrittseinrichtung 10 und/oder dem mobilen Endgerät 20 an das Serversystem 130 übermittelt werden.

In Fig. 4 ist eine schematische Darstellung eines Verfahrens zur Prüfung einer Zutrittseinrichtung 10 mithilfe eines mobilen Endgeräts 20 gemäß einer Ausführungsform der vorliegenden Erfindung gezeigt. In einem Schritt S40 erfolgt ein Übermitteln von Initialkonfigurationsinformationen von dem Serversystem 130 an das mobile Endgerät 20 und/oder an die Zutrittseinrichtung 10. In Abhängigkeit der übermittelten Initialkonfigurationsinformationen werden Betriebsparameter der Zutrittseinrichtung 10 eingestellt, entweder manuell durch einen Nutzer oder automatisiert durch eine computerimplementierte Ausführung der Initialkonfigurationsinformationen. In einem Schritt S41 wird eine Prüffahrt 200 durch die Zutrittseinrichtung 10 durchgeführt. Bei der Prüffahrt 200 werden die anhand der Initialkonfigurationsinformationen eingestellten Betriebsparameter verwendet. In einem Schritt S42 erfolgt ein Messen der Prüffahrt 200 mithilfe einer Messeinrichtung 25 des mobilen Endgeräts 20, wobei Messdaten betreffend die Prüffahrt 200 erzeugt werden. Optional erfolgt dabei eine Bearbeitung der aufgenommenen Messdaten mithilfe des mobilen Endgeräts 20 bevor die Messdaten in Schritt S43 an das Serversystem 130 übermittelt werden. In Schritt S43 wird zumindest ein Teil der in Schritt S42 erzeugten Messdaten von dem mobilen Endgerät 20 an das Serversystem 130 übermittelt. In Schritt S44 werden die in Schritt S43 übermittelten Messdaten durch das Serversystem 130 empfangen. In Schritt S45 erfolgt das Durchführen einer Analyse auf Grundlage der empfangenen Messdaten durch das Serversystem 130. Diese Analyse ist zur Prüfung der Zutrittseinrichtung 10 konfiguriert, insbesondere zur Ermittlung von Fehlern, Problemen und Abnutzungserscheinungen der Zutrittseinrichtung 10, die anhand der in Schritt S44 empfangenen Messdaten identifiziert werden.

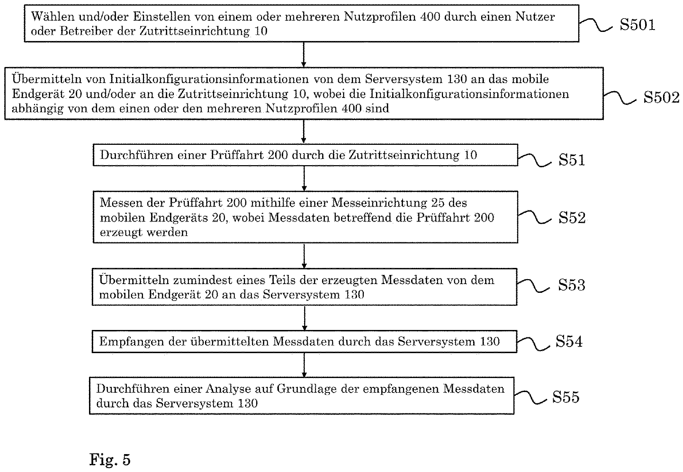

In Fig. 5 ist eine schematische Darstellung eines Verfahrens zur Prüfung einer Zutrittseinrichtung 10 mithilfe eines mobilen Endgeräts 20 gemäß einer Ausführungsform der vorliegenden Erfindung gezeigt. In einem Schritt S501 erfolgt ein Wählen und/oder Einstellen von einem oder mehreren Nutzprofilen 400 durch einen Nutzer oder Betreiber der Zutrittseinrichtung 10. In Abhängigkeit der gewählten und/oder eingestellten Nutzprofile 400 werden Initialkonfigurationsinformationen seitens des Serversystems 130 erzeugt oder erhalten. In einem Schritt S502 erfolgt ein Übermitteln der Initialkonfigurationsinformationen von dem Serversystem 130 an das mobile Endgerät 20 und/oder an die Zutrittseinrichtung 10, wobei die Initialkonfigurationsinformationen abhängig von dem einen oder den mehreren Nutzprofilen 400 sind. In Abhängigkeit der übermittelten Initialkonfigurationsinformationen werden Betriebsparameter der Zutrittseinrichtung eingestellt, entweder manuell durch einen Nutzer oder automatisiert durch eine computerimplementierte Ausführung der Initialkonfigurationsinformationen. In einem Schritt S51 wird eine Prüffahrt 200 durch die Zutrittseinrichtung 10 durchgeführt. Bei der Prüffahrt 200 werden die anhand der Initialkonfigurationsinformationen eingestellten Betriebsparameter verwendet. In einem Schritt S52 erfolgt ein Messen der Prüffahrt 200 mithilfe einer Messeinrichtung 25 des mobilen Endgeräts 20, wobei Messdaten betreffend die Prüffahrt 200 erzeugt werden. Optional erfolgt dabei eine Bearbeitung der aufgenommenen Messdaten mithilfe des mobilen Endgeräts 20 bevor die Messdaten in Schritt S53 an das Serversystem 130 übermittelt werden. In Schritt S53 wird zumindest ein Teil der in Schritt S52 erzeugten Messdaten von dem mobilen Endgerät 20 an das Serversystem 130 übermittelt. In Schritt S54 werden die in Schritt S53 übermittelten Messdaten durch das Serversystem 130 empfangen. In Schritt S55 erfolgt das Durchführen einer Analyse auf Grundlage der empfangenen Messdaten durch das Serversystem 130. Diese Analyse ist zur Prüfung der Zutrittseinrichtung 10 konfiguriert, insbesondere zur Ermittlung von Fehlern, Problemen und Abnutzungserscheinungen der Zutrittseinrichtung 10, die anhand der in Schritt S54 empfangenen Messdaten identifiziert werden.

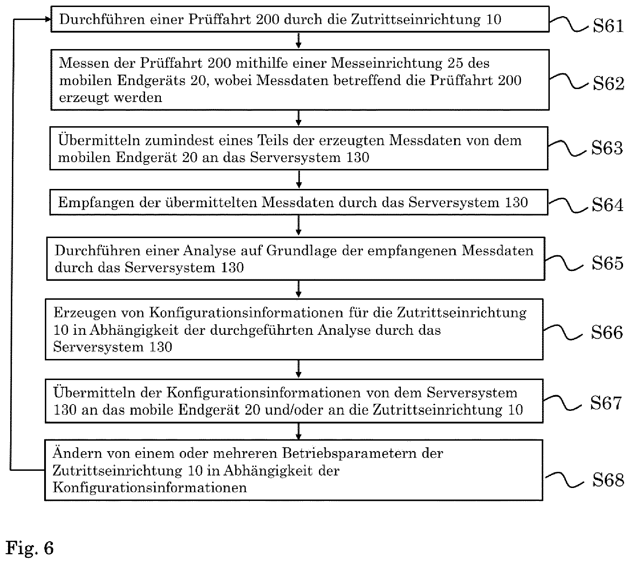

In Fig. 6 ist eine schematische Darstellung eines Verfahrens zur Prüfung einer Zutrittseinrichtung 10 mithilfe eines mobilen Endgeräts 20 gemäß einer Ausführungsform der vorliegenden Erfindung gezeigt. In einem Schritt S61 wird eine Prüffahrt 200 durch die Zutrittseinrichtung 10 durchgeführt. In einem Schritt S62 erfolgt ein Messen der Prüffahrt 200 mithilfe einer Messeinrichtung 25 des mobilen Endgeräts 20, wobei Messdaten betreffend die Prüffahrt 200 erzeugt werden. Optional erfolgt dabei eine Bearbeitung der aufgenommenen Messdaten mithilfe des mobilen Endgeräts 20 bevor die Messdaten in Schritt S63 an das Serversystem 130 übermittelt werden. In Schritt S63 wird zumindest ein Teil der in Schritt S62 erzeugten Messdaten von dem mobilen Endgerät 20 an das Serversystem 130 übermittelt. In Schritt S64 werden die in Schritt S63 übermittelten Messdaten durch das Serversystem 130 empfangen. In Schritt S65 erfolgt das Durchführen einer Analyse auf Grundlage der empfangenen Messdaten durch das Serversystem 130. Diese Analyse ist zur Prüfung der Zutrittseinrichtung 10 konfiguriert, insbesondere zur Ermittlung von Fehlern, Problemen und Abnutzungserscheinungen der Zutrittseinrichtung 10, die anhand der in Schritt S64 empfangenen Messdaten identifiziert werden. In einem Schritt S66 erfolgt ein Erzeugen von Konfigurationsinformationen für die Zutrittseinrichtung 10 in Abhängigkeit der in Schritt S65 durchgeführten Analyse durch das Serversystem 130. Insbesondere sind die Konfigurationsinformationen abhängig von in Schritt S65 ermittelten Problemen, Fehlern oder Abnutzungserscheinungen der Zutrittseinrichtung 20, die für die Prüffahrt 200 festgestellt wurden. Die Konfigurationsinformationen sind zur Anpassung der Betriebsparameter der Zutrittseinrichtung 10 derart vorgesehen, dass den in Schritt S65 ermittelten Problemen, Fehlern oder Abnutzungserscheinungen entgegengewirkt wird oder diese abgeschwächt werden. Optional sind die Konfigurationsinformationen ferner abhängig von einem oder mehreren Nutzprofilen 400 der Zutrittseinrichtung 10, die dem Serversystem 130 zugänglich sind. Anhand des oder der gewählten Nutzprofile 400 können die Betriebsparameter für bestimmte Anwendungen einer Zutrittseinrichtung 10 optimiert werden, beispielsweise um eine höchstmögliche Sicherheit zu gewährleisten, eine möglichst lange Lebensdauer, eine möglichst hohe Geschwindigkeit usw. In Schritt S67 erfolgt ein Übermitteln der Konfigurationsinformationen von dem Serversystem 130 an das mobile Endgerät 20 und/oder an die Zutrittseinrichtung 10. In Schritt S68 erfolgt ein Ändern von einem oder mehreren Betriebsparametern der Zutrittseinrichtung 10 in Abhängigkeit der Konfigurationsinformationen. Die Änderung kann dabei manuell durch einen Nutzer erfolgen oder automatisiert durch eine computerimplementierte Ausführung der Konfigurationsinformationen, beispielsweise mithilfe einer Steuerungsvorrichtung 12 der Zutrittseinrichtung 10. Optional ist es nun denkbar, dass das Verfahren, beginnend mit Schritt S61, wiederholt wird. In diesem Fall wird das Durchführen der Prüffahrt 200 in Schritt S61 mit dem oder den in Schritt S68 geänderten Betriebsparametern der Zutrittseinrichtung 10 wiederholt. Auch die weiteren Schritte S61 bis S65 oder S61 bis S68 werden wiederholt, vorzugsweise bis in Schritt S65 bei der Analyse auf Grundlage der in Schritt S64 empfangenen Messdaten ein Ergebnis erhalten wird, das wählbaren Güteanforderungen entspricht oder keine Verbesserung zur vorherigen Iteration des Verfahrens darstellt. Somit kann eine besonders vorteilhafte iterative Optimierung der Betriebsparameter der Zutrittseinrichtung 10 erfolgen. In der Praxis kann derart auf besonders vorteilhafte Weise sich anbahnenden Abnutzungserscheinungen, insbesondere Verschleißerscheinungen, der Zutrittseinrichtung 10 entgegengewirkt werden und/oder eine vorteilhafte Anpassung der Betriebsparameter der Zutrittseinrichtung 10 an lokale Gegebenheiten am Installationsort der Zutrittseinrichtung 10, beispielsweise an die Raumtemperatur, eine Windbelastung, Bodenunebenheiten usw., erfolgen.

### Bezugszeichenliste

- 10: Zutrittseinrichtung
- 10', 10", 10‴: Zutrittskomponenten
- 11: Türelement
- 12: Steuerungsvorrichtung
- 15: Markierungselement
- 16: elektrische Sensoreinrichtung
- 20: mobiles Endgerät
- 21: optische Messeinrichtung
- 22: akustische Messeinrichtung
- 25: Messeinrichtung
- 27: Bildschirm
- 28: Ausrichtungselement
- 100: Kommunikationsverbindung
- 101: Mobilfunknetz
- 130: Serversystem
- 200: Prüffahrt
- 400: Nutzprofile
- K: Kommunikationsschnittstelle

## Patentansprüche

1. Verfahren zur Prüfung einer Zutrittseinrichtung (10) mithilfe eines mobilen Endgeräts (20), wobei das mobile Endgerät (20) über eine direkte oder indirekte Kommunikationsverbindung (100) zur Kommunikation mit einem Serversystem (130) eingerichtet ist,
wobei das Verfahren die folgenden Schritte umfasst:
a) Durchführen einer Prüffahrt (200) durch die Zutrittseinrichtung (10), wobei die Prüffahrt (200) eine Öffnungsfahrt und/oder Schließfahrt oder zumindest einen Teilbereich einer Öffnungsfahrt und/oder Schließfahrt der Zutrittseinrichtung (10) umfasst, wobei die Zutrittseinrichtung (10) ein Vereinzelungselement und/oder Türelement ist,
b) Messen der Prüffahrt (200) mithilfe einer Messeinrichtung (25) des mobilen Endgeräts (20), wobei Messdaten betreffend die Prüffahrt (200) erzeugt werden,
c) Übermitteln zumindest eines Teils der in Schritt b) erzeugten Messdaten von dem mobilen Endgerät (20) an das Serversystem (130),
d) Empfangen der in Schritt c) übermittelten Messdaten durch das Serversystem (130),
e) Durchführen einer Analyse auf Grundlage der in Schritt d) empfangenen Messdaten durch das Serversystem (130), **gekennzeichnet dadurch, dass** Initialkonfigurationsinformationen, in einem Vorschritt vor Schritt a), von dem Serversystem (130) an das mobile Endgerät (20) und/oder an die Zutrittseinrichtung (10) übermittelt werden,
wobei die Initialkonfigurationsinformationen eine Einstellung von einem oder mehreren Betriebsparametern der Zutrittseinrichtung (10) betreffen, wobei in Abhängigkeit der Initialkonfigurationsinformationen in dem Vorschritt eine Einstellung des einen oder der mehreren Betriebsparameter der Zutrittseinrichtung (10) durchgeführt wird,
wobei die Initialkonfigurationsinformationen abhängig von einem oder mehreren Nutzprofilen (400) der Zutrittseinrichtung (10) sind,
wobei das eine oder die mehreren Nutzprofile (400) in Abhängigkeit einer Anwendung der Zutrittseinrichtung (10) gewählt und/oder konfiguriert sind.

2. Verfahren nach Anspruch 1,
- wobei in Schritt c) aktuelle Konfigurationsinformationen, betreffend einen oder mehrere beim Durchführen der Prüffahrt (200) in Schritt a) eingestellte Betriebsparameter der Zutrittseinrichtung (10), an das Serversystem (130) übermittelt werden, vorzugsweise von dem mobilen Endgerät (20) oder der Zutrittseinrichtung (10);
oder
- wobei aktuelle Konfigurationsinformationen, betreffend einen oder mehrere beim Durchführen der Prüffahrt (200) in Schritt a) eingestellte Betriebsparameter der Zutrittseinrichtung (10), im Serversystem (130) hinterlegt sind oder durch das Serversystem abrufbar sind, insbesondere als Teil einer digitalen Repräsentation der Zutrittseinrichtung;
vorzugsweise wobei das Durchführen der Analyse in Schritt e) unter Zuhilfenahme der aktuellen Konfigurationsinformationen erfolgt.

3. Verfahren nach einem der Ansprüche 1 oder 2, wobei das Erzeugen der Messdaten in Schritt b) umfasst, dass Messdaten betreffend die Prüffahrt (200) mithilfe der Messeinrichtung (25) aufgenommen werden,
wobei bevorzugt eine Bearbeitung der aufgenommenen Messdaten mithilfe des mobilen Endgeräts (20) erfolgt bevor die Messdaten in Schritt c) an das Serversystem (130) übermittelt werden,
wobei besonders bevorzugt die Bearbeitung der aufgenommenen Messdaten mithilfe des mobilen Endgeräts (20) vor der Übermittlung in Schritt c) eine, mehrere oder alle der folgenden Bearbeitungen umfasst:
- eine Filterung der aufgenommenen Messdaten;
- eine Objekterkennung betreffend die Zutrittseinrichtung (10) in den aufgenommenen, insbesondere optischen, Messdaten, wobei die aufgenommenen Messdaten auf Pixelbereiche beschränkt werden, die anhand der Objekterkennung als relevant identifiziert worden sind;
- eine Verringerung des Datenvolumens der aufgenommenen Messdaten, bevorzugt dadurch, dass:
- eine Auflösung oder Qualität der aufgenommenen Messdaten verringert wird,
- ein Dateiformat der aufgenommen Messdaten geändert wird,
- die aufgenommenen, insbesondere optischen, Messdaten in schwarz/weiße Messdaten und/oder in Graustufen gewandelt werden,
- Messdaten, die vor Beginn der Prüffahrt (200) aufgenommen wurden und/oder nach Beendigung der Prüffahrt (200) aufgenommen wurden, entfernt werden, und/oder
- die aufgenommen Messdaten auf einen zeitlichen Teilbereich der Prüffahrt (200) eingeschränkt werden.

4. Verfahren nach einem der vorhergehenden Ansprüche, wobei das Durchführen der Analyse in Schritt e) auf Grundlage der in Schritt d) empfangenen Messdaten eine, mehrere oder alle der folgenden Vorgänge umfasst:
- eine Prüfung von Funktionen der Zutrittseinrichtung (10);
- eine Ermittlung von Fehlern, insbesondere von Störungen, der Zutrittseinrichtung (10);
- eine Ermittlung von Abnutzungserscheinungen der Zutrittseinrichtung (10).

5. Verfahren nach einem der vorhergehenden Ansprüche, wobei Konfigurationsinformationen für die Zutrittseinrichtung (10) in Abhängigkeit der in Schritt e) durchgeführten Analyse von dem Serversystem (130) erzeugt werden,
wobei vorzugsweise die Konfigurationsinformationen abhängig von
- einem ermittelten Fehler, insbesondere einer ermittelten Störung, der Zutrittseinrichtung (10), und/oder
- einer ermittelten Abnutzungserscheinung der Zutrittseinrichtung (10)
sind,
wobei die Konfigurationsinformationen von dem Serversystem (130) an das mobile Endgerät (20) und/oder an die Zutrittseinrichtung (10) übermittelt werden.

6. Verfahren nach Anspruch 5, wobei die Konfigurationsinformationen eine Änderung von einem oder mehreren Betriebsparametern der Zutrittseinrichtung (10) betreffen, wobei in Abhängigkeit der Konfigurationsinformationen in einem Schritt f) eine Änderung des einen oder der mehreren Betriebsparameter der Zutrittseinrichtung (10) durchgeführt wird.

7. Verfahren nach Anspruch 6, wobei - nach der Änderung des einen oder der mehreren Betriebsparameter der Zutrittseinrichtung (10) in Schritt f) - die Schritte a) bis e) oder a) bis f) wiederholt werden, insbesondere wobei bei dieser Wiederholung die Prüffahrt der Zutrittseinrichtung in Schritt a) mit dem einen oder den mehreren geänderten Betriebsparametern der Zutrittseinrichtung (10) durchgeführt wird.

8. Verfahren nach einem der vorhergehenden Ansprüche, wobei die Messeinrichtung (25) eine optische Messeinrichtung (21), insbesondere eine Kamera, und/oder eine akustische Messeinrichtung (22), insbesondere ein Mikrophon, umfasst,
- wobei das Messen in Schritt a) mithilfe der optische Messeinrichtung (21) erfolgt, sodass die erzeugten Messdaten optische Messdaten umfassen, und/oder
- wobei das Messen in Schritt a) mithilfe der akustischen Messeinrichtung (22) erfolgt, sodass die erzeugten Messdaten akustische Messdaten umfassen.

9. Verfahren nach Anspruch 8, wobei die in Schritt a) erzeugten Messdaten sowohl optische Messdaten als auch akustische Messdaten umfassen, insbesondere wobei die optischen Messdaten und akustischen Messdaten gleichzeitig in Schritt a) aufgenommen werden, wobei die Zutrittseinrichtung (10) während der Prüffahrt (200) in Schritt a) ein akustisches Kalibrationssignal und/oder ein optisches Kalibrationssignal ausgibt,
wobei anhand des akustischen Kalibrationssignals und/oder des optischen Kalibrationssignals eine Abstimmung der optischen und akustischen Messdaten aufeinander erfolgt, vorzugsweise in Schritt b) und/oder Schritt e).

10. Verfahren nach einem der vorhergehenden Ansprüche, wobei vor der Prüffahrt in Schritt a) ein Markierungselement (15) oder mehrere Markierungselemente (15) an der Zutrittseinrichtung (10) angeordnet werden, wobei eine Erkennung einer Position der Zutrittseinrichtung (10) in den Messdaten, insbesondere den optischen Messdaten, mithilfe des Markierungselements (15) oder der mehreren Markierungselemente (15) erfolgt, vorzugsweise bei der Durchführung der Analyse in Schritt e) und/oder bei der Bearbeitung der aufgenommenen Messdaten in Schritt b).

11. Verfahren nach einem der vorhergehenden Ansprüche, wobei eine Sensoreinrichtung, insbesondere eine Radarsensoreinrichtung, vorhanden ist, wobei mithilfe der Sensoreinrichtung während der Prüffahrt in Schritt a) weitere Messdaten, betreffend eine Position und/oder eine Geschwindigkeit der Zutrittseinrichtung (10) während der Prüffahrt (200), ermittelt werden, wobei die weiteren Messdaten an das Serversystem (130) übermittelt werden, wobei die Analyse in Schritt e) zusätzlich mithilfe der weiteren Messdaten durchgeführt wird.

12. Verfahren nach einem der vorhergehenden Ansprüche, wobei die Zutrittseinrichtung (10) eine elektrische Sensoreinrichtung (16) aufweist, wobei mithilfe der elektrischen Sensoreinrichtung (16) elektrische Messdaten, betreffend eine elektrische Spannung und/oder einen elektrischen Strom eines Motors der Zutrittseinrichtung (16) und/oder einer Steuerungsvorrichtung (12) der Zutrittseinrichtung (16), während der Prüffahrt (200) in Schritt a) ermittelt werden, wobei die elektrischen Messdaten an das Serversystem (130) übermittelt werden, wobei die Analyse in Schritt e) zusätzlich mithilfe der elektrischen Messdaten durchgeführt wird.

13. System zur Prüfung einer Zutrittseinrichtung (10) mithilfe eines mobilen Endgeräts (20), wobei das System das mobile Endgerät (20) und ein Serversystem (130) umfasst, wobei das mobile Endgerät (20) über eine direkte oder indirekte Kommunikationsverbindung (100) zur Kommunikation mit dem Serversystem (130) eingerichtet ist, wobei das System konfiguriert ist, um ein Verfahren nach einem der Ansprüche 1 bis 12 durchzuführen.

## Claims

1. A method for testing an access device (10) using a mobile terminal (20), wherein the mobile terminal (20) is configured to communicate with a server system (130) via a direct or indirect communication connection (100), wherein the method comprises the following steps:
a) carrying out a test run (200) through the access device (10), wherein the test run (200) comprises an opening cycle and/or closing cycle or at least a portion of an opening cycle and/or closing cycle of the access device (10), wherein the access device (10) is a separating element and/or door element,
b) measuring the test run (200) using a measuring device (25) of the mobile terminal (20), wherein measurement data relating to the test run (200) is generated,
c) transmitting at least part of the measurement data generated in step b) from the mobile terminal (20) to the server system (130),
d) receiving the measurement data transmitted in step c) by way of the server system (130),
e) carrying out an analysis based on the measurement data received in step d) by way of the server system (130), **characterised in that**
initial configuration information, in a preliminary step before step a), is transmitted from the server system (130) to the mobile terminal (20) and/or to the access device (10), wherein the initial configuration information relates to a setting of one or a plurality of operating parameters of the access device (10), wherein depending on the initial configuration information, a setting of one or a plurality of operating parameters of the access device (10) is carried out in the preliminary step,
wherein the initial configuration information is dependent on one or a plurality of user profiles (400) of the access device (10), wherein the one or plurality of user profiles (400) are selected and/or configured depending on an application of the access device (10).

2. The method according to claim 1,
- wherein in step c), current configuration information relating to one or a plurality of operating parameters of the access device (10), which are set when carrying out the test run (200) in step a), is transmitted to the server system (130), preferably from the mobile terminal (20) or the access device (10);
or
- wherein current configuration information relating to one or a plurality of operating parameters of the access device (10), which are set when carrying out the test run (200) in step a), is stored in the server system (130) or can be accessed by the server system,
in particular as part of a digital representation of the access device;
preferably wherein the analysis in step e) is carried out with the aid of the current configuration information.

3. The method according to one of claims 1 or 2, wherein generating the measurement data in step b) comprises recording measurement data relating to the test run (200) using the measuring device (25),
wherein the recorded measurement data is preferably processed using the mobile terminal (20) before the measurement data is transmitted to the server system (130) in step c),
wherein particularly preferably the processing of the recorded measurement data using the mobile terminal (20) comprises one, a plurality of or all of the following processing before transmission in step c):
- filtering of the recorded measurement data;
- an object recognition relating to the access device (10) in the recorded, in particular optical, measurement data, wherein the recorded measurement data is limited to pixel areas that have been identified as relevant based on the object recognition;
- reduction of the data volume of the recorded measurement data, preferably in that:
- a resolution or quality of the recorded measurement data is reduced,
- a file format of the recorded measurement data is changed,
- the recorded, in particular optical, measurement data is converted into black/white measurement data and/or grayscale,
- measurement data that were recorded before the start of the test run (200) and/or after the end of the test run (200) are removed, and/or
- the recorded measurement data is restricted to a temporal sub-area of the test run (200).

4. The method according to one of the preceding claims, wherein carrying out the analysis in step e) based on the measurement data received in step d) comprises one, a plurality of or all of the following processes:
- a test of functions of the access device (10);
- a determination of errors, in particular faults, of the access device (10);
- a determination of signs of wear on the access device (10).

5. The method according to one of the preceding claims, wherein configuration information for the access device (10) is generated by the server system (130) depending on the analysis carried out in step e),
wherein preferably the configuration information depends on
- a detected error, in particular a detected fault, of the access device (10), and/or
- a determined sign of wear on the access device (10),
wherein the configuration information is transmitted from the server system (130) to the mobile terminal (20) and/or to the access device (10).

6. The method according to claim 5, wherein the configuration information relates to a change in one or a plurality of operating parameters of the access device (10), wherein a change in the one or the plurality of operating parameters of the access device (10) is carried out in a step f) depending on the configuration information.

7. The method according to claim 6, wherein - after changing the one or the plurality of operating parameters of the access device (10) in step f) - the steps a) to e) or a) to f) are repeated, in particular wherein during this repetition, the test run of the access device in step a) is carried out with the one or the plurality of changed operating parameters of the access device (10).

8. The method according to one of the preceding claims, wherein the measuring device (25) comprises an optical measuring device (21), in particular a camera, and/or an acoustic measuring device (22), in particular a microphone,
- wherein the measurement in step a) is carried out using the optical measuring device (21), such that the measurement data generated comprises optical measurement data, and/or
- wherein the measurement in step a) is carried out using the acoustic measuring device (22), such that the measurement data generated comprises acoustic measurement data.

9. The method according to claim 8, wherein the measurement data generated in step a) comprises both optical measurement data and acoustic measurement data, in particular wherein the optical measurement data and acoustic measurement data are recorded simultaneously in step a), wherein the access device (10) during the test run (200) in step a) outputs an acoustic calibration signal and/or an optical calibration signal,
wherein the optical and acoustic measurement data are coordinated with one another based on the acoustic calibration signal and/or the optical calibration signal, preferably in step b) and/or step e).

10. The method according to one of the preceding claims, wherein before the test run in step a), a marking element (15) or a plurality of marking elements (15) are arranged on the access device (10), wherein a detection of a position of the access device (10) in the measurement data, in particular the optical measurement data, using the marking element (15) or the plurality of marking elements (15) takes place, preferably when carrying out the analysis in step e) and/or when processing the recorded measurement data in step b).

11. The method according to one of the preceding claims, wherein a sensor device, in particular a radar sensor device, is present, wherein further measurement data relating to a position and/or a speed of the access device (10) during the test run (200) is determined using the sensor device during the test run in step a), wherein the further measurement data is transmitted to the server system (130), wherein the analysis in step e) is additionally carried out using the further measurement data.

12. The method according to one of the preceding claims, wherein the access device (10) has an electrical sensor device (16), wherein electrical measurement data relating to an electrical voltage and/or an electrical current of a motor of the access device (16) and/or a control device (12) of the access device (16) is determined during the test run (200) in step a) using the electrical sensor device (16), wherein the electrical measurement data is transmitted to the server system (130), wherein the analysis in step e) is additionally carried out using the electrical measurement data.

13. A system for testing an access device (10) using a mobile terminal (20), wherein the system comprises the mobile terminal (20) and a server system (130), wherein the mobile terminal (20) is configured to communicate with the server system (130) via a direct or indirect communication connection (100),
wherein the system is configured to carry out a method according to one of claims 1 to 12.

## Revendications

1. Procédé destiné à tester un dispositif d'accès (10) au moyen d'un terminal mobile (20), dans lequel le terminal mobile (20) est configuré pour communiquer avec un système de serveur (130) par l'intermédiaire d'une connexion de communication directe ou indirecte (100), dans lequel le procédé comprend les étapes suivantes :
a) la réalisation d'une exécution de test (200) à travers le dispositif d'accès (10), dans lequel l'exécution de test (200) comprend un cycle d'ouverture et/ou un cycle de fermeture ou au moins une portion d'un cycle d'ouverture et/ou d'un cycle de fermeture du dispositif d'accès (10), dans lequel le dispositif d'accès (10) est un élément de séparation et/ou un élément de porte,
b) la mesure de l'exécution de test (200) au moyen d'un dispositif de mesure (25) du terminal mobile (20), dans lequel des données de mesure se rapportant à l'exécution de test (200) sont générées,
c) la transmission d'au moins une partie des données de mesure générées à l'étape b) depuis le terminal mobile (20) vers le système de serveur (130),
d) la réception des données de mesure transmises à l'étape c) par le biais du système de serveur (130),
e) la réalisation d'une analyse sur la base des données de mesure reçues à l'étape d) par le biais du système de serveur (130), **caractérisé en ce que**
des informations de configuration initiales, à une étape préliminaire avant l'étape a), sont transmises depuis le système de serveur (130) vers le terminal mobile (20) et/ou vers le dispositif d'accès (10), dans lequel les informations de configuration initiales se rapportent à un réglage d'un ou d'une pluralité de paramètres de fonctionnement du dispositif d'accès (10), dans lequel en fonction des informations de configuration initiales, un réglage d'un ou d'une pluralité de paramètres de fonctionnement du dispositif d'accès (10) est réalisé à l'étape préliminaire,
dans lequel les informations de configuration initiales dépendent d'un ou d'une pluralité de profils d'utilisateur (400) du dispositif d'accès (10), dans lequel l'un ou la pluralité de profils d'utilisateur (400) sont choisis et/ou configurés en fonction d'une application du dispositif d'accès (10).

2. Procédé selon la revendication 1,
- dans lequel à l'étape c), des informations de configuration actuelles se rapportant à un ou à une pluralité de paramètres de fonctionnement du dispositif d'accès (10), qui sont réglés lors de la réalisation de l'exécution de test (200) à l'étape a), sont transmises vers le système de serveur (130), de préférence depuis le terminal mobile (20) ou le dispositif d'accès (10) ;
ou
- dans lequel des informations de configuration actuelles se rapportant à un ou à une pluralité de paramètres de fonctionnement du dispositif d'accès (10), qui sont réglés lors de la réalisation de l'exécution de test (200) à l'étape a), sont stockées dans le système de serveur (130) ou sont accessibles par le système de serveur,
en particulier dans le cadre d'une représentation numérique du dispositif d'accès ;
de préférence dans lequel l'analyse à l'étape e) est réalisée avec l'aide des informations de configuration actuelles.

3. Procédé selon l'une des revendications 1 ou 2, dans lequel la génération des données de mesure à l'étape b) comprend l'enregistrement de données de mesure se rapportant à l'exécution de test (200) au moyen du dispositif de mesure (25),
dans lequel les données de mesure enregistrées sont de préférence traitées au moyen du terminal mobile (20) avant que les données de mesure soient transmises vers le système de serveur (130) à l'étape c),
dans lequel particulièrement de préférence le traitement des données de mesure enregistrées au moyen du terminal mobile (20) comprend un, une pluralité ou la totalité des traitements suivants avant transmission à l'étape c) :
- filtrage des données de mesure enregistrées ;
- une reconnaissance d'objet se rapportant au dispositif d'accès (10) dans les données de mesure, en particulier optique, enregistrées, dans lequel les données de mesure enregistrées sont limitées à des zones de pixels qui ont été identifiées comme pertinentes sur la base de la reconnaissance d'objet ;
- réduction du volume de données des données de mesure enregistrées, de préférence en ce que :
- une résolution ou une qualité des données de mesure enregistrées est réduite,
- un format de fichier des données de mesure enregistrées est modifié,
- les données de mesure, en particulier optique, enregistrées sont converties en données de mesure noir/blanc et/ou en niveaux de gris,
- des données de mesure qui ont été enregistrées avant le début de l'exécution de test (200) et/ou après la fin de l'exécution de test (200) sont supprimées, et/ou
- les données de mesure enregistrées sont restreintes à une souszone temporelle de l'exécution de test (200).

4. Procédé selon l'une des revendications précédentes, dans lequel la réalisation de l'analyse à l'étape e) sur la base des données de mesure reçues à l'étape d) comprend un, une pluralité ou l'ensemble des processus suivants :
- un test de fonctions du dispositif d'accès (10) ;
- une détermination d'erreurs, en particulier des défauts, du dispositif d'accès (10) ;
- une détermination de signes d'usure sur le dispositif d'accès (10).

5. Procédé selon l'une des revendications précédentes, dans lequel des informations de configuration pour le dispositif d'accès (10) sont générées par le système de serveur (130) en fonction de l'analyse réalisée à l'étape e),
dans lequel de préférence les informations de configuration dépendent de
- une erreur détectée, en particulier un défaut détecté, du dispositif d'accès (10), et/ou
- un signe déterminé d'usure sur le dispositif d'accès (10),
dans lequel les informations de configuration sont transmises depuis le système de serveur (130) vers le terminal mobile (20) et/ou vers le dispositif d'accès (10).

6. Procédé selon la revendication 5, dans lequel les informations de configuration se rapportent à une modification dans un ou dans une pluralité de paramètres de fonctionnement du dispositif d'accès (10), dans lequel une modification dans l'un ou dans la pluralité de paramètres de fonctionnement du dispositif d'accès (10) est réalisée à une étape f) en fonction des informations de configuration.

7. Procédé selon la revendication 6, dans lequel - après la modification de l'un ou de la pluralité de paramètres de fonctionnement du dispositif d'accès (10) à l'étape f) - les étapes a) à e) ou a) à f) sont répétées, en particulier dans lequel pendant cette répétition, l'exécution de test du dispositif d'accès à l'étape a) est réalisée avec l'un ou la pluralité de paramètres de fonctionnement modifiés du dispositif d'accès (10).

8. Procédé selon l'une des revendications précédentes, dans lequel le dispositif de mesure (25) comprend un dispositif de mesure optique (21), en particulier une caméra, et/ou un dispositif de mesure acoustique (22), en particulier un microphone,
- dans lequel la mesure à l'étape a) est réalisée au moyen du dispositif de mesure optique (21), de telle sorte que les données de mesure générées comprennent des données de mesure optique, et/ou
- dans lequel la mesure à l'étape a) est réalisée au moyen du dispositif de mesure acoustique (22), de telle sorte que les données de mesure générées comprennent des données de mesure acoustique.

9. Procédé selon la revendication 8, dans lequel les données de mesure générées à l'étape a) comprennent à la fois des données de mesure optique et des données de mesure acoustique, en particulier dans lequel les données de mesure optique et les données de mesure acoustique sont enregistrées simultanément à l'étape a), dans lequel le dispositif d'accès (10) pendant l'exécution de test (200) à l'étape a) délivre un signal d'étalonnage acoustique et/ou un signal d'étalonnage optique,
dans lequel les données de mesure optique et acoustique sont coordonnées les unes avec les autres sur la base du signal d'étalonnage acoustique et/ou du signal d'étalonnage optique, de préférence à l'étape b) et/ou à l'étape e).

10. Procédé selon l'une des revendications précédentes, dans lequel avant l'exécution de test à l'étape a), un élément de marquage (15) ou une pluralité d'éléments de marquage (15) sont agencés sur le dispositif d'accès (10), dans lequel une détection d'une position du dispositif d'accès (10) dans les données de mesure, en particulier les données de mesure optique, au moyen de l'élément de marquage (15) ou de la pluralité d'éléments de marquage (15) a lieu, de préférence lors de la réalisation de l'analyse à l'étape e) et/ou lors du traitement des données de mesure enregistrées à l'étape b).

11. Procédé selon l'une des revendications précédentes, dans lequel un dispositif de capteur, en particulier un dispositif de capteur radar, est présent, dans lequel d'autres données de mesure se rapportant à une position et/ou une vitesse du dispositif d'accès (10) pendant l'exécution de test (200) sont déterminées au moyen du dispositif de capteur pendant l'exécution de test à l'étape a), dans lequel les autres données de mesure sont transmises vers le système de serveur (130), dans lequel l'analyse à l'étape e) est en outre réalisée au moyen des autres données de mesure.

12. Procédé selon l'une des revendications précédentes, dans lequel le dispositif d'accès (10) a un dispositif de capteur électrique (16), dans lequel des données de mesure électrique se rapportant à une tension électrique et/ou à un courant électrique d'un moteur du dispositif d'accès (16) et/ou d'un dispositif de commande (12) du dispositif d'accès (16) sont déterminées pendant l'exécution de test (200) à l'étape a) au moyen du dispositif de capteur électrique (16), dans lequel les données de mesure électrique sont transmises vers le système de serveur (130), dans lequel l'analyse à l'étape e) est en outre réalisée au moyen des données de mesure électrique.

13. Système destiné à tester un dispositif d'accès (10) au moyen d'un terminal mobile (20), dans lequel le système comprend le terminal mobile (20) et un système de serveur (130), dans lequel le terminal mobile (20) est configuré pour communiquer avec le système de serveur (130) par l'intermédiaire d'une connexion de communication directe ou indirecte (100),
dans lequel le système est configuré pour réaliser un procédé selon l'une des revendications 1 à 12.
